# EUROPEAN PATENT SPECIFICATION

(11) **EP 3 483 684 B1**
(45) Date of publication and mention of the grant of the patent: **22.11.2023**
(21) Application number: 18193442.3
(22) Date of filing: 10.09.2018
(51) Int. Cl.: G05B 19/418, G05B 19/04, G05B 19/05, G05B 19/425

(54) **CONTROL SYSTEM**
STEUERUNGSSYSTEM
SYSTÈME DE COMMANDE

(30) Priority: 25.10.2017 JP 2017206492
(43) Date of publication of application: 15.05.2019
(73) Proprietor: OMRON CORPORATION, Kyoto-shi, Kyoto 600-8530 (JP)
(72) Inventor: YONEDA, Mitsuhiro, Kyoto-shi, Kyoto 600-8530 (JP); TAMURA, Yoshihide, Kyoto-shi, Kyoto 600-8530 (JP); SEKIMOTO, Hidehiko, Kyoto-shi, Kyoto 600-8530 (JP); OYA, Taku, Kyoto-shi, Kyoto 600-8530 (JP); NIWA, Yoshimi, Kyoto-shi, Kyoto 600-8530 (JP); SHIMAMURA, Junji, Kyoto-shi, Kyoto 600-8530 (JP)
(74) Representative: Becker Kurig & Partner Patentanwälte mbB

(56) References cited:
- EP-A1- 3 015 227
- WO-A1-2017/063887
- US-A1- 2004 257 021
- US-A1- 2009 299 524
- US-A1- 2017 144 297

## Description

### BACKGROUND

### Technical Field

The present disclosure relates to a technology for teaching an operation of a corresponding control target to each of a plurality of network-connected driving devices.

### Description of Related Art

In a robot system including a plurality of robot controllers that control a plurality of respective robots, one teaching device (typically, a teaching pendant) is used for each robot controller in the related art (for example, Japanese Laid-Open No. 2000-288976) (see Patent Document 1). Therefore, when teaching to a plurality of robots is performed, a user needs to change a teaching device according to a robot controller that is a teaching target, and work efficiency is low.

As such a robot system, for example, Japanese Laid-Open No. 2017-77606 (Patent Document 2) discloses a robot system in which a teaching device is connected to a network to which a plurality of robot controllers are connected, and a communication destination of the teaching device can be switched so that any one of the robot controllers and the teaching device can selectively communicate in response to a connection request from each robot controller.

Further, Japanese Laid-Open No. 2006-130577 (Patent Document 3) discloses a robot system including a plurality of robots, a robot control device that controls at least one of the plurality of robots, and a teaching device connected to the robot control device.

US 2009/299524 A1 discloses an apparatus providing selective communication between multiple programmable robot controllers and one or more teaching devices connected by a network. The network controls communication between the teaching devices and the controllers including active tasks and passive tasks for preventing communication of active tasks between any of the controllers and more than one of any of the teaching devices. The network permits communication of the passive tasks between any of the controllers and one of the teaching devices communicating active tasks with another one of the controllers.

US 2017/144297 A1 discloses a robot control system comprising a plurality of robots and a worker terminal that is capable of sending operation commands to a plurality of robots, by using wireless communications. The worker terminal has an identification part that identifies a target robot to be used for work, from among a plurality of robots; a reception part that receives operation instructions for the robot from a worker; and a wireless communications part that sends operation commands to only the robot identified as the target robot by the identification part, when an operation instruction is received by the reception part.

EP 3 015 227 A1 discloses a control system comprising a master control device configured to control a first controlled object based on time information output from a first clock unit and a slave control device connected to the master control device via a network and configured to control a second controlled object different from the first controlled object based on control information transmitted from the master control device and time information output from a second clock unit.

WO 2017/063887 A1 discloses a method for the synchronization of the movement sequences of at least two robots. The method comprises during the operation of a robot cell with at least two robots, a path parameter is regularly calculated for each of the at least two robots based on a current position of the respective robot and a previously determined robot path of the respective robot. The path parameter thereby represents the current position of the respective robot. US2004257021 relates to jogging multiple industrial robot arms simultaneously with an incremental displacement of both a leader robot and follower robots. More particularly, it pertains to a track jog mode, in which a follower tracks the motion of the leader, and to a mirror jog mode, in which a follower mirrors the motion of the leader,

### SUMMARY

In a configuration disclosed in Patent Document 2 described above, teaching to a plurality of robots can be performed by one teaching device, but it is necessary for the communication destination of the teaching device to be switched according to the robot controller that is a teaching target. Further, since there is only one robot controller that can be taught in one teaching, it is necessary for a user to perform teaching repeatedly according to the number of robot controllers. Therefore, there is a problem in that work efficiency is still low.

Further, in a robot system, for a plurality of robots in which it is necessary for operation timings to be synchronized with one another, operating the plurality of robots at the same time and performing teaching may be required. However, in the configuration disclosed in Patent Document 2, it is not possible to meet such a requirement.

In the configuration disclosed in Patent Document 3 described above, there is concern that the number of robots connected to the robot control device may be restricted by the hardware of the robot control device. Further, there is a problem in that a model of the robot connected to the robot control device is restricted by the hardware of the robot control device.

The present disclosure is directed to solving such a problem, and one objective thereof is to provide a control system capable of teaching operations of corresponding control targets to a plurality of driving devices connected to a network at the same time using a single teaching device.

The present invention is provided by the appended claims. The following disclosure serves a better understanding of the invention.

### BRIEF DESCRIPTION OF THE DRAWINGS

FIG. 1 is a schematic diagram illustrating an example of an application situation of a control system according to an embodiment.
FIG. 2 is a schematic diagram illustrating an example of a configuration of a teaching pendant illustrated in FIG. 1.
FIG. 3 is a block diagram illustrating an example of a hardware configuration of a control system according to the embodiment.
FIG. 4 is a schematic diagram illustrating a first example of a configuration of data communication in the control system according to the embodiment.
FIG. 5 is a schematic diagram illustrating a second example of a configuration of the data communication in the control system according to the embodiment.
FIG. 6 is a schematic diagram illustrating a third example of a configuration of the data communication in the control system according to the embodiment.
FIG. 7 is a schematic diagram illustrating a fourth example of a configuration of the data communication in the control system according to the embodiment.
FIG. 8 is a schematic diagram illustrating an example of a data structure of an I/O refreshing frame that is used in the control system according to the embodiment.
FIG. 9 is a diagram illustrating a process necessary for outputting a command from a control device to a driving device.
FIG. 10 is a schematic diagram illustrating an output timing synchronization function that is provided by the control system according to the embodiment.
FIG. 11 is a timing chart showing a process (part 1) of each part regarding an output timing synchronization function that is provided by the control system according to the embodiment.
FIG. 12 is a flowchart showing a processing procedure (part 2) regarding the output timing synchronization function in the control system according to the embodiment.
FIG. 13 includes schematic diagrams (A) to (C) illustrating an embodiment in which a command from a teaching pendant is communicated as a message.
FIG. 14 is a schematic diagram illustrating an output timing synchronization function using message communication.
FIG. 15 is a schematic diagram illustrating an example of an emergency stop process in the control system according to the embodiment.
FIG. 16 is a schematic diagram illustrating another example of the emergency stop process in the control system according to the embodiment.
FIG. 17 is a schematic diagram illustrating an example of an operation confirmation process in the control system according to the embodiment.
FIG. 18 is a schematic diagram illustrating a collision avoidance function that is provided by the control system according to the embodiment.
FIG. 19a and FIG. 19b are schematic diagrams illustrating an other-robot avoidance mode in the control system according to the embodiment.
FIG. 20 is a flowchart showing a processing procedure of a collision avoidance function in the control system according to the embodiment.

### DESCRIPTION OF THE EMBODIMENTS

Embodiments of the present disclosure will be described in detail with reference to the drawings. It should be noted that in the drawings, the same or corresponding parts are denoted by the same reference numerals, and description thereof will not be repeated.

### <A. Embodiment of application >

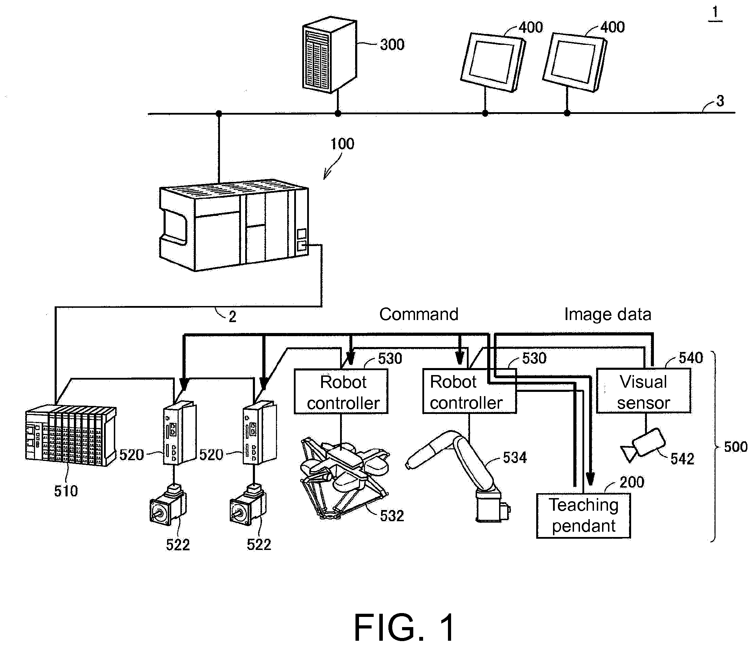

First, an embodiment of a situation in which the present disclosure is applied will be described with reference to FIG. 1. FIG. 1 is a schematic diagram illustrating an embodiment of an application scene of a control system 1 according to an embodiment. FIG. 1 illustrates the control system 1 centered on a control device 100.

The control device 100 corresponds to an industrial controller that controls control targets such as various facilities or devices. The control device 100 is a type of computer that executes a control calculation as will be described below and may be typically embodied as a programmable controller (PLC). The control device 100 may be connected to various field devices 500 via a field network 2 or the like. The control device 100 exchanges data with one or a plurality of field devices 500 via the field network 2. Generally, a "field network" is also referred to as a "field bus", but in the following description, field networks are collectively referred to as a "field network" for simplicity of description.

The control calculation to be executed in the control device 100 includes a process of collecting data (hereinafter also referred to as "input data") collected or generated in the field device 500 (an input process), a process of generating data such as a command to the field device 500 (hereinafter also referred to as "output data") (a calculation process), a process of transmitting the generated output data to the field device 500 that is a target (an output process), and the like.

It is preferable for a bus or a network for performing periodic communication in which an arrival time of data is guaranteed to be adopted as the field network 2. EtherCAT (registered trademark), EtherNet/IP (registered trademark), DeviceNet (registered trademark), CompoNet (registered trademark), or the like is known for such a bus or network for performing periodic communication.

A configuration in which respective parts related to the data transfer include timers synchronized in time with one another is assumed when transfer of such field data is realized. That is, in a bus or a network, the respective parts perform transmission or reception of data at a timing that is designated using the timers synchronized in time with one another.

Any field device 500 can be connected to the field network 2. The field device 500 includes an actuator that gives a certain physical action to a manufacturing apparatus, a production line, or the like (hereinafter also referred to as a "field"), an input/output device that exchanges information with the field, and the like.

Data is exchanged between the control device 100 and the field device 500 via the field network 2, and the exchanged data is updated over very short periods in hundreds of µsec to tens of msec order. It should be noted that this process of updating the exchanged data is also referred to as an input and output refreshing process.

In the embodiment of the configuration illustrated in FIG. 1, the field device 500 includes a remote input/output (I/O) device 510, a servo driver 520, a servo motor 522, robot controllers 530, robots 532 and 534, and a visual sensor 540. The field device 500 is not limited thereto, and any device that collects input data, any device that gives some action according to output data, or the like can be adopted.

A device that collects input data such as an input relay or various sensors (for example, an analog sensor, a temperature sensor, and a vibration sensor), and a device that gives some action to a field such as an output relay, a contactor, a servo driver, and any other actuators are also connected to the remote I/O device 510.

The servo drivers 520 drive the servo motors 522 according to output data (for example, a position command or a speed command) from the control device 100.

The robot controllers 530 perform trajectory calculation, angle calculation for each axis, or the like according to, for example, a position command from the control device 100, and drives servo motors or the like constituting the robots 532 and 534 according to calculation results. In the embodiment of a configuration illustrated in FIG. 1, the robot 532 is a parallel robot, and the robot 534 is an articulated robot. It should be noted that the robot is not limited to a mechanism illustrated in FIG. 1, and any mechanism can be adopted. Further, a configuration in which the robot controllers 530 and the robots 532 and 534 are separate is exemplified for convenience of description, but the present disclosure is not limited thereto and the robot controllers 530 and the robots 532 and 534 may be integrated.

The visual sensor 540 has a configuration in which an imaging part 542 for imaging a machine or facility that is a control target and a subject such as a workpiece, and an image processing part (not illustrated) for processing an image captured by the imaging part 542 are integrated. However, the imaging part 542 and the image processing part may be configured to be separate.

The control device 100 is also connected to other devices via a high-level network 3. Ethernet (registered trademark) or EtherNet/IP (registered trademark) which is a general network protocol may be adopted as the high-level network 3. More specifically, one or a plurality of server devices 300 and one or a plurality of display devices 400 may be connected to the high-level network 3.

The server device 300 is assumed to be a database system, a manufacturing execution system (MES), or the like. The present disclosure is not limited thereto, and a device providing an information-based service may be connected to the high-level network 3. A process of acquiring information from the manufacturing apparatus or facility that is a control target and performing macroscopic or microscopic analysis, or the like is assumed as the information-based service.

The display device 400 receives an operation from the user, outputs a command according to the operation of the user to the control device 100, and graphically displays calculation results in the control device 100, or the like.

A teaching pendant 200 can be connected to the robot controllers 530 which are driving devices of the robots 532 and 534 and the servo drivers 520 which are driving devices of the servo motors 522. The teaching pendant 200 is a device for teaching an operation of the machine or facility that is a control target to the driving device. Specifically, the teaching pendant 200 displays image data from the visual sensor 540, an operation state of the control target from the driving device, and the like, and gives various commands to the driving device in response to an operation of the user. The user can move the control target to a position required for calibration or the like by operating the teaching pendant 200 while referring to the display of the teaching pendant 200.

In the embodiment of the configuration illustrated in FIG. 1, the teaching pendant 200 is connected to the robot controller 530 that drives the robot 534. Serial communication may be used for communication between the robot controller 530 and the teaching pendant 200. It should be noted that parallel communication may be used. Communication lines that are used to connect the teaching pendant 200 to the robot controller 530 are, for example, two communication lines including a communication line for transmission and a communication line for reception.

The teaching pendant 200 outputs a command or the like according to a user operation to the robot controller 530. This command includes a position command indicating a target position of the robot 534 that is a control target of the robot controller 530, a speed command indicating a target speed of the robot 534, and the like.

In the control system 1 according to the embodiment, the teaching pendant 200 can further output a command to at least one driving device connected to the field network 2 via the field network 2. A case in which a command is output to a plurality of driving devices (the robot controller 530 and the servo drivers 520) other than the driving device (the robot controller 530) that is a connection destination of the teaching pendant 200 is exemplified in FIG. 1. In such a case, the command output from the teaching pendant 200 is output to the field network 2 via the driving device (the robot controller 530) that is the connection destination. The command is transmitted to each driving device via the field network 2.

That is, the teaching pendant 200 can output commands to the plurality of driving devices (the robot controllers 530 and the servo drivers 520) at the same time using the field network 2. Accordingly, the user can teach operations of the corresponding control targets to the plurality of driving devices connected to the field network 2 at the same time using the single teaching pendant 200.

The teaching pendant 200 also receives the image captured by the imaging part 542 of the visual sensor 540 via the field network 2 and the driving device (the robot controller 530) that is the connection destination. The teaching pendant 200 can display the received image on the display part.

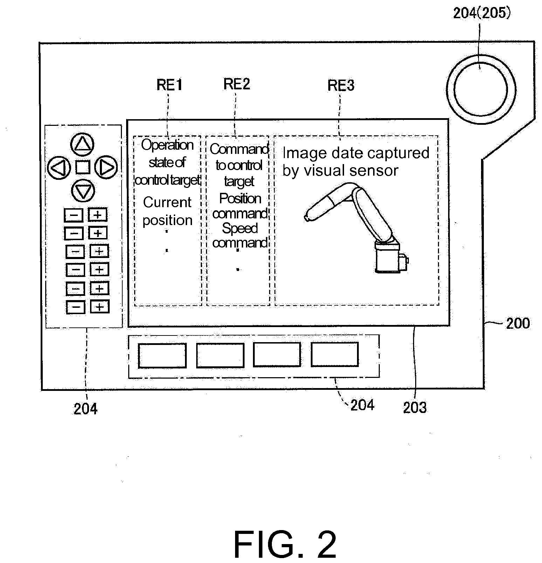

FIG. 2 is a schematic diagram illustrating an embodiment of a configuration of the teaching pendant 200 illustrated in FIG. 1. Referring to FIG. 2, the teaching pendant 200 includes an operation part 204 and a display part 203. The operation part 204 includes various keys to be operated by a user, and receives an input including a command to the teaching pendant 200 from the user. The operation part 204 includes an emergency stop button 205 capable of emergently stopping the servo motor 522 and the robots 532 and 534.

The display part 203 includes, for example, a liquid crystal display (LCD) or an organic electro luminescence (EL), and displays an image according to a key operation of the user. The display part 203 can further display the image captured by the imaging part 542 of the visual sensor 540. In the embodiment of the configuration illustrated in FIG. 2, the display part 203 includes a region RE1 in which an operation state of a machine or facility that is a control target is displayed, a region RE2 in which a command to the control target is displayed, and a region RE3 in which an image imaged by the imaging part 542 of the visual sensor 540 is displayed.

That is, when the teaching pendant 200 executes a command for the machine or facility that is the control target, the teaching pendant 200 can control the display part 203 so that a behavior of the control target and the command for the control target are displayed on the same screen. Thus, the user can confirm the behavior of the control target and the command realizing the behavior on the same screen. The user can further register a position of the control target by operating the operation part 204. The user can also program the operation or work of the control target by operating the operation part 204 and inputting the command for the control target.

The teaching pendant 200 corresponds to an embodiment of a "teaching device". It should be noted that the teaching device is not limited to the configuration illustrated in FIGS. 1 and 2 and any configuration can be adopted therefor. Further, in FIGS. 1 and 2, a configuration in which the driving device and the teaching device are separate is exemplified, but the present disclosure is not limited thereto and the driving device and the teaching device may be integrated. That is, the teaching device may be incorporated in the driving device.

### <B. Embodiment of hardware configuration of control system>

Next, an embodiment of a hardware configuration of the control system 1 according to the embodiment will be described.

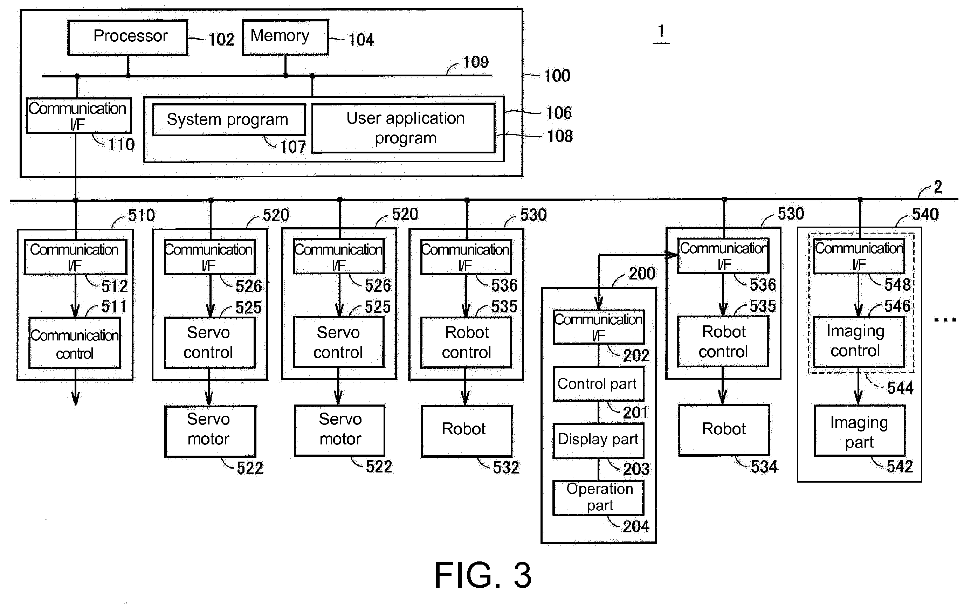

FIG. 3 is a block diagram illustrating an embodiment of a hardware configuration of the control system 1 according to the embodiment. The control system 1 includes a control device 100 and a plurality of field devices connected thereto via a field network 2. In the embodiment, the field device includes a remote I/O device 510, servo drivers 520, servo motors 522, robot controllers 530, robots 532 and 534, and a visual sensor 540.

The control device 100 includes, as main components, a processor 102, a memory 104, a storage 106, and a communication interface (I/F) 110. These components are connected to each other via a bus 109.

The processor 102 realizes various processes by reading a system program 107 and a user application program 108 stored in the storage 106 to the memory 104 and executing the programs. The memory 104 includes a volatile storage device such as a dynamic random access memory (DRAM) or a static random access memory (SRAM). The storage 106 is a nonvolatile storage device such as a hard disk or a flash memory. In the storage 106, the user application program 108 designed according to a control target or the like is stored, in addition to the system program 107 for controlling each part of the control device 100. A communication I/F 110 corresponds to a transmission and reception circuit that transfers data received from another device to yet another device. The communication I/F 110 includes a communication port connected to the field network 2.

The remote I/O device 510 includes a communication control part 511 and a communication I/F 512. The communication control part 511 mediates requests between the control device 100 and one or a plurality of devices connected to the remote I/O device 510. For example, in response to a communication request from the control device 100, the communication control part 511 requests the one or a plurality of devices to transmit output data.

The servo driver 520 includes a servo control part 525 and a communication I/F 526. The servo control part 525 generates a command to be output to the corresponding servo motor 522 on the basis of a command from the control device 100 or the teaching pendant 200, and controls the corresponding servo motor 522 according to the generated command. An encoder (not illustrated) is provided on a rotation shaft of the servo motor 522. The encoder feeds back a position (a rotation angle), a rotation speed, the cumulative number of rotations, and the like of the servo motor 522 to the servo control part 525. The servo control part 525 includes an interface that transmits a target position, a target rotation speed, or the like of the servo motor 522, and an interface that receives a current position, a current rotation speed, or the like of the servo motor 522.

The communication I/F 526 corresponds to a transmission and reception circuit for transferring data received from another device to yet another device. The communication I/F 526 includes a communication port that is connected to the field network 2 as will be described below.

The robot controller 530 includes a robot control part 535 and a communication I/F 536. The robot control part 535 generates a command to be output to the corresponding robot on the basis of a command from the control device 100 or the teaching pendant 200, and controls the corresponding robot according to the generated command. Specifically, one or a plurality of servo drivers are incorporated in the robot control part 535, and each servo driver controls a corresponding servo motor. An encoder (not illustrated) is provided on the rotation shaft of the servo motor. The encoder feeds back a position (rotation angle) of the servo motor, a rotation speed of the servo motor, the cumulative number of rotations of the servo motor, or the like to the corresponding servo driver. It should be noted that the servo driver is not necessarily incorporated in the robot controller 530 and may be provided separately from the robot controller 530.

The visual sensor 540 includes an imaging part 542 and an image processing part 544. The imaging part 542 is a device that images a subject present in an imaging range, and mainly includes an optical system such as a lens or an aperture, and a light reception element such as a charge coupled device (CCD) image sensor or a complementary metal oxide semiconductor (CMOS) image sensor. The imaging part 542 performs imaging according to a command from the image processing part 544 and outputs image data obtained by performing imaging to the image processing part 544.

The image processing part 544 includes an imaging control part 546 and a communication I/F 548. These components are connected to each other so that the components can perform data communication via a bus (not illustrated). The imaging control part 546 controls an imaging operation in the imaging part 542. The imaging control part 546 includes an interface that transmits various commands to the imaging part 542 and an interface that receives image data from the imaging part 542. The communication I/F 548 exchanges various pieces of data with the control device 100.

The teaching pendant 200 includes a control part 201, a communication I/F 202, a display part 203, and an operation part 204. As illustrated in FIG. 2, the operation part 204 receives an input including a command for a desired driving device from the user.

The control part 201 receives information that the user inputs to the operation part 204. When a command for a desired driving device is received, the control part 201 generates a command (such as a position command and a speed command) for controlling the driving device on the basis of the command, and outputs the generated command to the driving device (the robot controller 530) that is a connection destination. When the command generated by the teaching pendant 200 is received, the driving device (the robot controller 530) that is a connection destination outputs the command to the desired driving device.

The control part 201 also receives image data output from the visual sensor 540 via the driving device (the robot controller 530) that is a connection destination, and outputs the image data to the display part 203. As illustrated in FIG. 2, the display part 203 displays an image according to the image data output from the control part 201.

The communication I/F 202 is an interface via which the teaching pendant 200 communicates with an external device including the driving device (the robot controller 530) that is a connection destination.

### <C. Data communication in control system>

Next, data communication in the control system 1 according to the embodiment will be described.

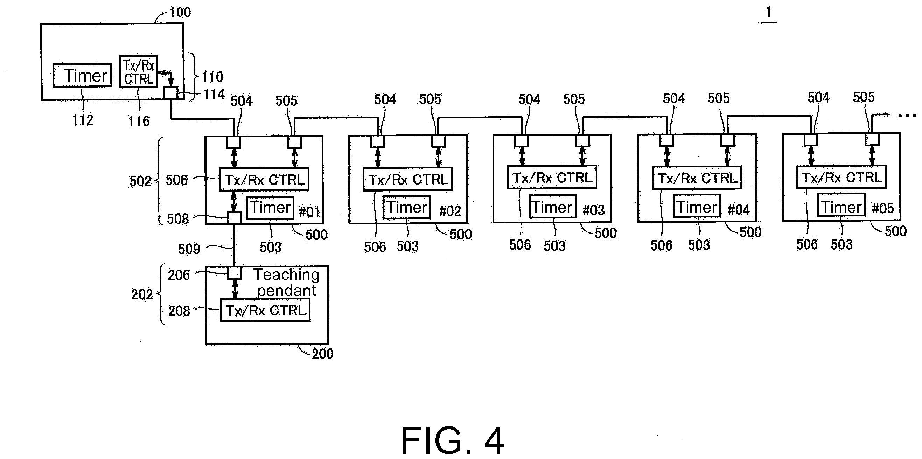

FIG. 4 is a schematic diagram illustrating a first embodiment of a configuration of the data communication in the control system 1 according to the embodiment.

Referring to FIG. 4, the control device 100 and the plurality of field devices 500 are connected in a daisy chain via the field network 2. In the data communication in the control system 1, the control device 100 functions as a master that manages data transmission inside the network, and each of the plurality of field devices 500 functions as a slave that performs data transmission according to a command from the master. In the following description, the plurality of field devices 500 are also referred to as slaves #01 to #05, .... However, a connection aspect of the control device 100 and the plurality of field devices 500 is not limited to the daisy chain, and other connection aspects such as a tree connection or a star connection may be used.

The communication I/F 110 in the control device 100 (the master) corresponds to a communication circuit that transmits and receives data to and from the plurality of field devices 500 via the field network 2. The communication I/F 110 receives data (input data) collected or generated by the plurality of field devices 500, and transmits the data (output data) acquired or generated by the control device 100 to the plurality of field devices 500.

Specifically, the communication I/F 110 is physically connected to the field network 2, transmits a communication frame to the field network 2, and receives a communication frame transferred on the field network 2 to output the communication frame to the processor 102 (see FIG. 2). The communication I/F 110 has a function of performing, for example, time management and transmission and reception timing management for guaranteeing an arrival time of the communication frame transferred on the field network 2, in addition to exchanging the data via the field network 2.

On the field network 2, communication frames having a predetermined data structure may be sequentially transferred at predetermined periods, and each of the control device 100 and the field device 500 writes designated data to a commanded area and reads necessary data from a corresponding area, for the sequentially transferred communication frames.

More specifically, the communication I/F 110 includes a communication port 114, a transmission and reception controller (Tx/Rx CTRL) 116, and a timer 112. The communication port 114 is a part that is physically connected to the field network 2, generates an electric signal according to a command from the transmission and reception controller 116, transmits the electric signal to the field network 2, converts an electric signal generated on the field network 2 into a digital signal, and outputs the digital signal to the transmission and reception controller 116.

The transmission and reception controller 116 performs a process regarding generation and reception of a communication frame that is transferred on the field network 2.

The timer 112 generates a pulse serving as a reference for a timing at which transmission or the like of a communication frame or the like is instructed from the transmission and reception controller 116. For the timer 112, a real time clock can be adopted, but in the embodiment, a free run counter that counts up (increments) at predetermined periods is used. A current time can be calculated by treating a counter value output by the free run counter as an elapsed time from a certain point of time, and accordingly, the free run counter can be caused to function as a timer.

In each of the field devices 500 (slaves), the communication I/F 502 processes communication frames that are sequentially transferred on the field network 2. That is, when the communication I/F 502 receives any communication frame via the field network 2, the communication I/F 502 performs data writing and/or data reading on the received communication frame, and then, transmits the communication frame to a field device 500 located next on the field network 2. The communication I/F 502 provides a function of such frame relay.

More specifically, the communication I/F 502 includes communication ports 504 and 505, a transmission and reception controller 506, and a timer 503. The communication ports 504 and 505 are parts that are physically connected to the field network 2, and perform a process such as reception and reproduction of communication frames transferred on the field network 2 according to a command from the transmission and reception controller 506 to realize sequential transfer of the communication frames.

The transmission and reception controller 506 performs data writing and/or data reading on the communication frame transferred on the field network 2.

The timer 503 generates a clock serving as a reference for a timing of output of a command, collection of field information, and the like in the transmission and reception controller 506. For the timer 503, a real time clock can be adopted, but in the embodiment, a free run counter that counts up (increments) at predetermined periods is used.

The teaching pendant 200 is connected to the field device 500 constituting a driving device that is a control target among the plurality of field devices 500. In the embodiment of the configuration of FIG. 4, the teaching pendant 200 is connected to the field device 500 corresponding to a "slave #01". The slave #01 is, for example, a robot controller or a servo driver. The communication I/F 502 in the slave #01 further includes a communication port 508.

In the teaching pendant 200, the communication I/F 202 includes a communication port 206 and a transmission and reception controller 208. The communication port 202 is connected to the communication port 508 in the slave #01 via a communication line 509. The communication line 509 may be a communication line using any one of a serial communication scheme and a parallel communication scheme or may be any one of a bus and a network. The transmission and reception controller 208 controls exchange of data with the slave #01 via the communication line 509.

### <D. Connection aspect of teaching pendant>

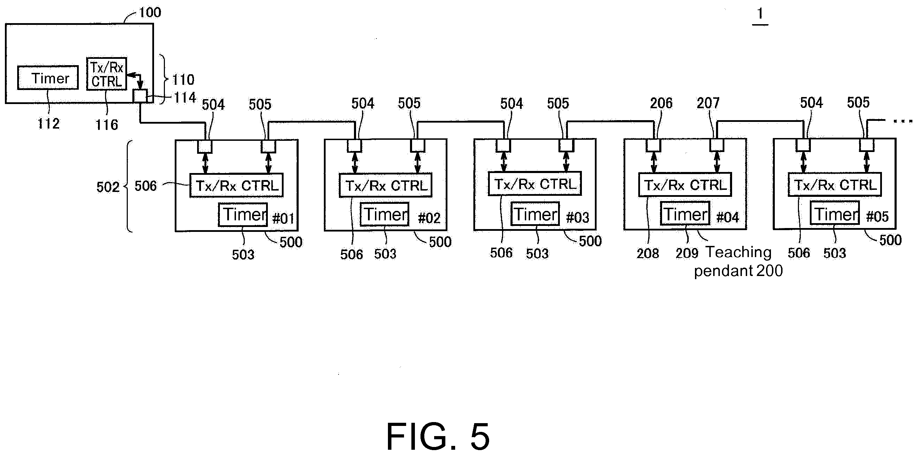

Next, an aspect of connection of the teaching pendant 200 to the field network 2 will be described. The connection aspect of the teaching pendant 200 is not limited to the connection aspect illustrated in FIG. 4, and a connection aspect as illustrated in FIGS. 5 to 7 can be adopted.

FIG. 5 is a schematic diagram illustrating a second embodiment of the configuration of data communication in the control system 1 according to the embodiment.

The second embodiment of the configuration illustrated in FIG. 5 differs from the first embodiment of the configuration illustrated in FIG. 4 in the connection aspect of the teaching pendant 200. In FIG. 5, the teaching pendant 200 is connected to the control device 100 and the plurality of field devices 500 in a daisy chain via the field network 2. That is, the teaching pendant 200 can function as a slave in data communication. In the embodiment illustrated in FIG. 5, the teaching pendant 200 constitutes a slave #04.

The teaching pendant 200 includes communication ports 206 and 207, a transmission and reception controller 208, and a timer 209 as a communication I/F 202. The communication ports 206 and 207 are parts that are physically connected to the field network 2, and perform a process such as reception and reproduction of a communication frame transferred on the field network 2 according to a command from the transmission and reception controller 208 to realize sequential transfer of communication frames.

The transmission and reception controller 208 performs data writing and/or data reading on the communication frame transferred on the field network 2.

The timer 209 generates a clock serving as a reference for a timing of output of a command, collection of field information, and the like in the transmission and reception controller 208. The timer 209 is in time synchronization with the timer 112 and the timer 503. For the timer 209, a real time clock can be adopted, but in the embodiment, a free run counter that counts up (increments) at predetermined periods is used.

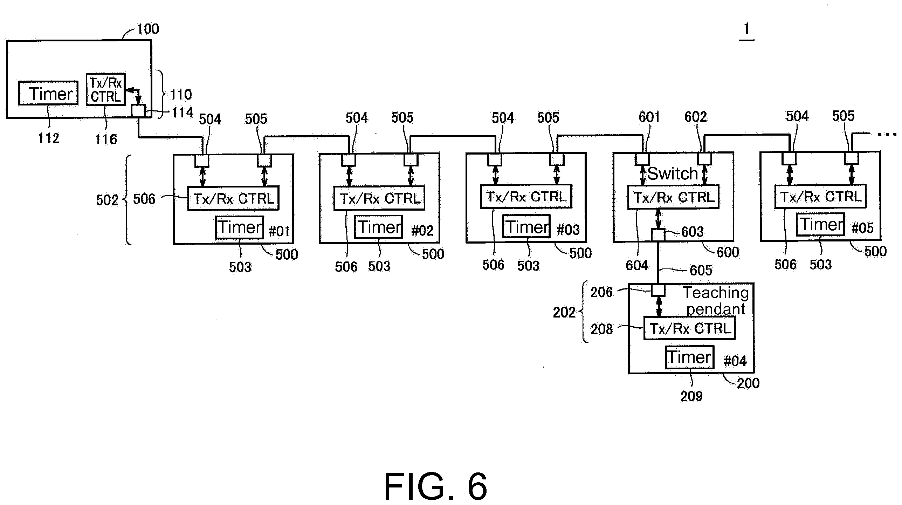

FIG. 6 is a schematic diagram illustrating a third embodiment of the configuration of the data communication in the control system 1 according to the embodiment.

The third embodiment of the configuration illustrated in FIG. 6 differs from the first embodiment of the configuration illustrated in FIG. 4 in the connection aspect of the teaching pendant 200. In FIG. 6, a switch 600 is connected to the control device 100 and the plurality of field devices 500 in a daisy chain via the field network 2.

The switch 600 includes communication ports 601 to 603 and a transmission and reception controller 604. The communication ports 601 and 602 are physically connected to the field network 2. The communication port 603 is connected to the communication port 206 of the teaching pendant 200 via a communication line 605. The communication line 605 may be a communication line using any one of a serial communication scheme and a parallel communication scheme or may be any one of a bus and a network.

The switch 600 connects the teaching pendant 200 to the field network 2 when data exchange occurs between the teaching pendant 200 and the control device 100 or the field device 500. Accordingly, the teaching pendant 200 can function as a slave (a slave #04 in FIG. 6) in data communication. On the other hand, when there is no exchange of data between the teaching pendant 200 and the control device 100 or the field device 500, the switch 600 can disconnect the teaching pendant 200 from the field network 2.

The transmission and reception controller 604 in the switch 600 performs data writing and/or data reading on communication frames transferred on the field network 2. The communication ports 601 and 602 perform a process such as reception and reproduction of the communication frames transferred on the field network 2 according to a command from the transmission and reception controller 604 to realize sequential transfer of the communication frames.

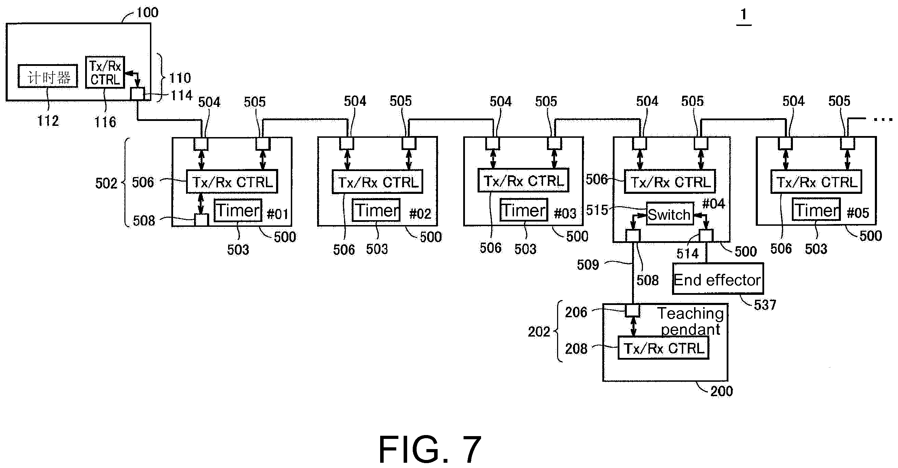

FIG. 7 is a schematic diagram illustrating a fourth embodiment of a configuration of the data communication in the control system 1 according to the embodiment.

The fourth embodiment of a configuration illustrated in FIG. 7 is different from the first embodiment of the configuration illustrated in FIG. 4 in a connection aspect of the teaching pendant 200. In FIG. 7, a field device 500 (for example, a slave #04) constituting a driving device that is a control target among the plurality of field devices 500 includes, as the communication I/F 502, a communication port 514 to which a machine or facility that is a control target is connected, a communication port 508 to which the teaching pendant 200 is connected, and a switch 515 that switches a connection between the communication ports 508 and 514 and the transmission and reception controller 506. For example, an end effector 537 of a robot is connected to the communication port 514. The end effector is, for example, a pickup tool for a workpiece and is connected to an arm of the robot.

When no exchange of data occurs between the teaching pendant 200 and the control device 100 or the field device 500, the switch 515 connects the communication port 514 to the transmission and reception controller 506 to connect the end effector 537 to the slave #04. When data exchange occurs between the teaching pendant 200 and the control device 100 or the field device 500, the switch 515 connects the communication port 508 to the transmission and reception controller 506 to connect the teaching pendant 200 to the slave #04.

### <E. Embodiment of communication frame>

Next, an embodiment of a communication frame that is used in the control system 1 according to the embodiment will be described. In the embodiment, as an implementation embodiment, a communication frame for performing I/O refreshing is used. The I/O refreshing has a concept including a process of updating the value of the input data held in the control device 100 with a latest value collected by the corresponding field device 500 (input refreshing), and a process of reflecting the value of the output data calculated by the control device 100 as the output value of the corresponding field device 500 (output refreshing).

As such a communication frame, an I/O refreshing frame is adopted. The I/O refreshing frame is configured to be able to store both input data and output data necessary for input refreshing. It should be noted that the input refreshing and the output refreshing may be implemented separately. In this case, a communication frame configured to store only one of the input data and the output data is adopted.

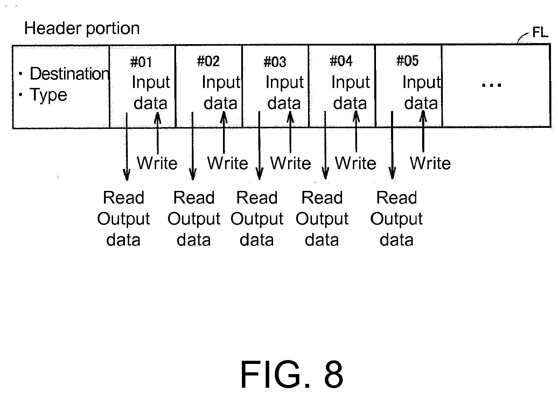

FIG. 8 is a schematic diagram illustrating an embodiment of a data structure of an I/O refreshing frame FL that is used in the control system 1 according to the embodiment. Referring to FIG. 8, the I/O refreshing frame FL includes a header portion for storing a frame type, a destination, and the like, and a body portion for storing data.

As the frame type stored in the header portion, identification information for specifying a type of a communication frame may be used. For example, identification information indicating unicast, multicast, or broadcast may be used. As the destination, identification information of the field device 500 that is a transmission destination, or the like is used.

A plurality of areas for storing input data and output data are defined in the body portion. The respective areas are associated with all or some of the field devices 500 (slaves #01 to #05) existing in a transfer path of the I/O refreshing frame FL 05), respectively.

When the field device 500 receives the I/O refreshing frame, the field device 500 reads the output data stored in the area allocated to the field device 500, and writes the input data collected or generated by the field device 500 to the area allocated to the field device 500. The reading of the output data and the writing of the input data are executed in each field device, thereby realizing I/O refreshing.

### <F. Transmission of command to driving device>

Next, a process necessary for transmitting a command from the teaching pendant 200 to the driving device in the control system 1 according to the embodiment will be described.

As will be described below, a command from the teaching pendant 200 can be transmitted using the communication frame FL illustrated in FIG. 8.

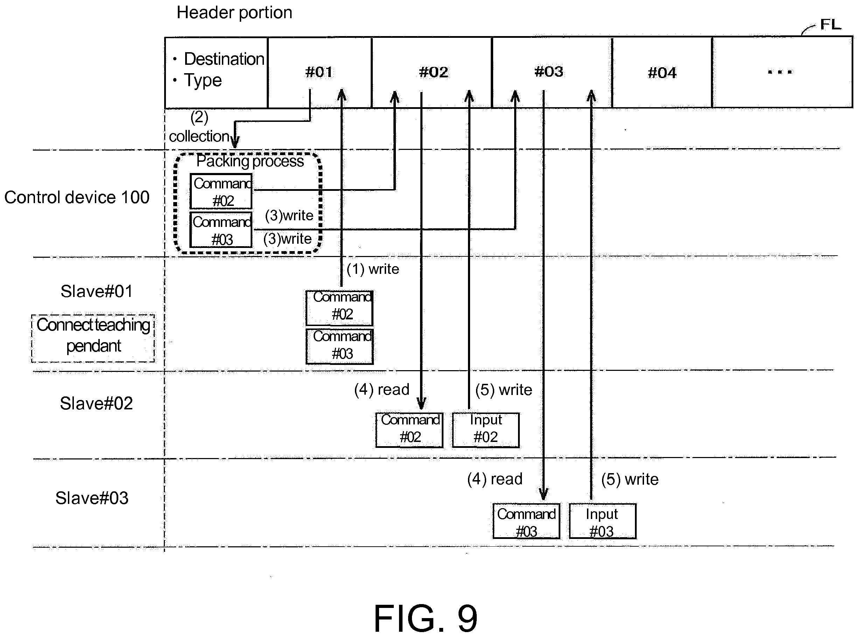

FIG. 9 is a diagram illustrating a process necessary for outputting a command from a driving device to which the teaching pendant 200 is connected to another driving device in the control system according to the embodiment.

Referring to FIG. 9, a process when a command is output from a driving device (also referred to as a slave #01) to which the teaching pendant 200 is connected to other driving devices (also referred to as slaves #02 and #03) will be described with reference to FIG. 9.

First, in the teaching pendant 200, a command directed to the slave #02 (hereinafter also referred to as a "command #02") and a command directed to the slave #03 (hereinafter also referred to as a "command #03") are generated, and the generated commands #02 and #03 are sent to the slave #01.

In slave #01, an input data transmission process including, for example, collection of input data to be transmitted to the control device 100 is executed before arrival of communication frames FL sequentially transferred on the field network 2. In this input data transmission process, the slave #01 collects commands (commands #02 and #03) to be transmitted from the teaching pendant 200 to the other driving devices.

Next, when the slave #01 receives the communication frame FL, the slave #01 reads output data addressed to the slave #01 from the area allocated to the slave #01 in the received communication frame FL. Subsequently, the slave #01 writes the input data and the commands #02 and #03 to the area allocated to the slave #01 (corresponding to (1) in FIG. 9).

The commands #02 and #03 written to the communication frame FL are collected by the control device 100 at an execution timing of the next I/O refreshing process (corresponding to (2) in FIG. 9).

In the control device 100, output data to be directed to the driving device that is a target is generated, and a packing process for storing the generated data in the communication frame FL and transmitting the resultant communication frame FL is executed. In this packing process, the collected commands are stored in the area allocated to the driving device that is a target. In the embodiment of FIG. 9, the command (command #02) directed to the slave #02 is stored in the area allocated to the slave #02 of the communication frame FL. Further, the command (command #03) directed to the slave #03 is stored in the area allocated to the slave #03 of the communication frame FL (corresponding to (3) in FIG. 9).

For output data defining an output signal from the field device 500, a communication frame FL in which the output data that is a target has been stored is transmitted to the field device 500 that is a target via the field network 2.

In the field device 500 that is a target, when the communication frame FL is received, a process of reading necessary output data from the received communication frame FL, for example, is executed, and the read output data is externally output as a real signal. In this case, in the slave #02, the command #02 is included in the read output data, and in the slave #03, the command #03 is included in the read output data (corresponding to (4) in FIG. 9). Each of the slaves #02 and #03 executes an output data reception process including a process of externally outputting a signal corresponding to the read output data.

Each of the slaves #02 and #03 reads the output data addressed to the slave from the area allocated to the slave in the communication frame FL, and then, writes the input data to the area allocated to the slave (corresponding to (5) in FIG. 9).

### <G. Output timing synchronization function of each field device in control system>

Next, an output timing synchronization function provided by the control system 1 according to the embodiment will be described.

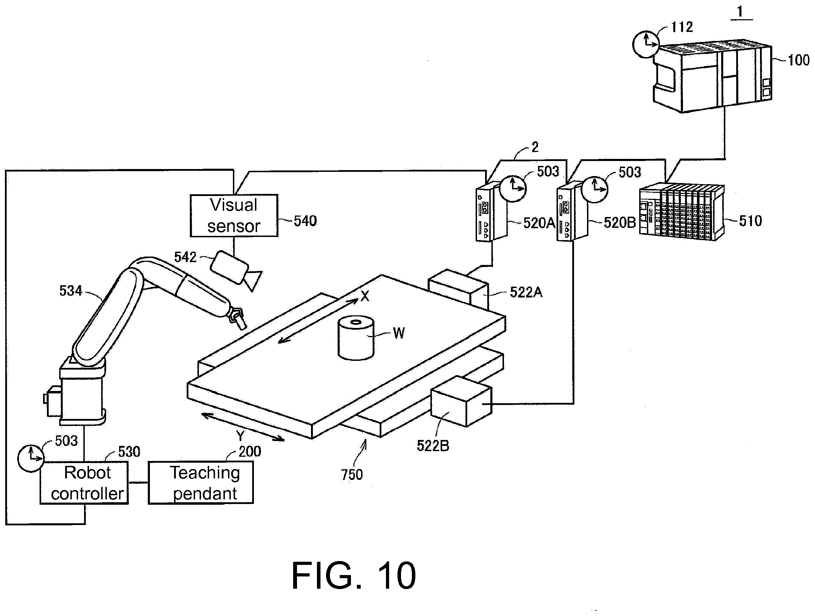

FIG. 10 is a schematic diagram illustrating the output timing synchronization function provided by the control system 1 according to the embodiment.

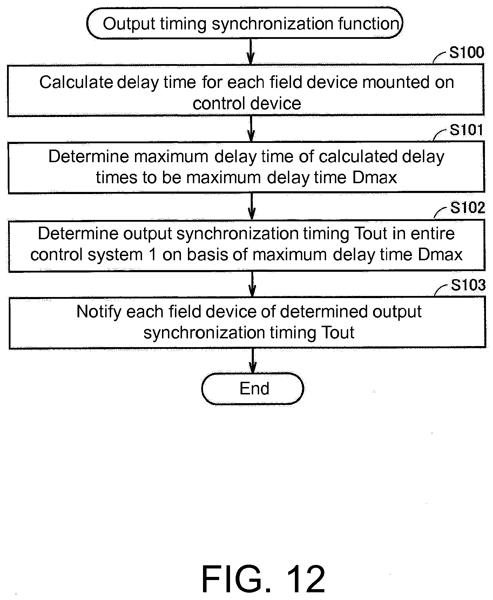

Referring to FIG. 10, the control system 1 includes an articulated robot 534 and an XY stage 750 that holds a workpiece W. FIG. 12 illustrates an embodiment of an application in which a part gripped by a tip of the articulated robot 534 is inserted into a hole provided in the workpiece W.

The articulated robot 534 is driven by the robot controller 530, and the XY stage 750 is driven by the servo drivers 520A and 520B. The servo driver 520A controls a servo motor 522A that drives an X axis of the XY stage 750. The servo driver 520B controls a servo motor 522B that drives a Y axis of the XY stage 750.

Since it is necessary to link the articulated robot 534 with the XY stage 750, the robot controller 530 and the servo drivers 520A and 520B are all connected to the control device 100. The control device 100 gives commands to the robot controller 530 and the servo drivers 520A and 520B.

The teaching pendant 200 is connected to the robot controller 530. The teaching pendant 200 can give commands to the robot controller 530 and the servo drivers 520A and 520B.

By executing a command given from the teaching pendant 200, the robot controller 530 causes the articulated robot 534 to behave according to the command. The servo drivers 520A and 520B execute the command given from the teaching pendant 200 to position the workpiece W placed on the XY stage 750 at an appropriate position.

In order to operate the articulated robot 534 and the XY stage 750 in cooperation with each other using the teaching pendant 200, it is necessary to synchronize control timings between the robot controller 530 and the servo drivers 520A and 520B. The control system 1 according to the embodiment has an output timing synchronization function of synchronizing a timing at which the robot controller 530 outputs a command for the articulated robot 534 with a timing at which the servo drivers 520A and 520B output commands for the servo motors 522A and 522B. Accordingly, the operation of the articulated robot 534 and the operation of the XY stage 750 can be synchronized with each other.

### (g1: Process related to output timing synchronization function (Part 1))

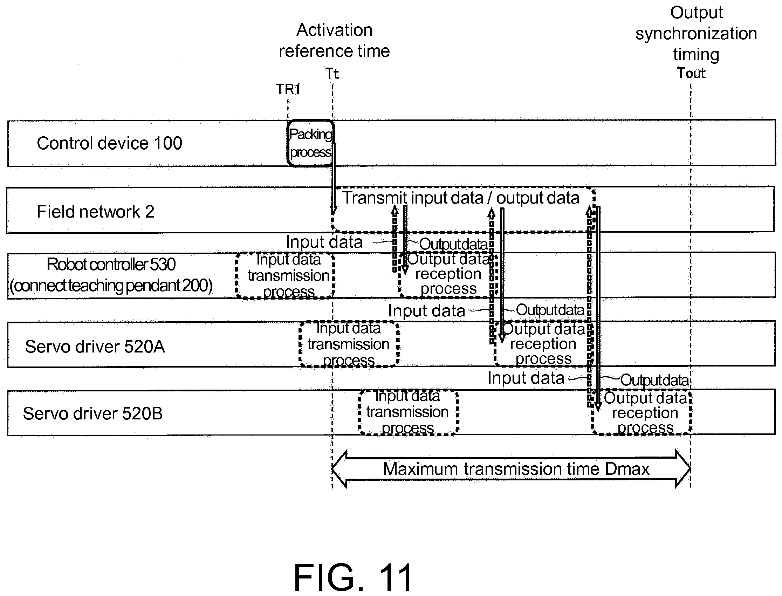

FIG. 11 is a timing chart showing a process of each part related to the output timing synchronization function provided by the control system 1 according to the embodiment. FIG. 10 mainly illustrates a process regarding output refreshing.

Referring to FIG. 11, the control device 100 sequentially executes preprocessing for transmitting output data generated through execution of an I/O refreshing process, and preprocessing (packing process) for storing the output data in a communication frame that is to be transmitted by the field network 2. At a timing at which the execution of the packing process is completed, the communication frame which is an I/O refreshing frame is sent to the field network 2. A timing at which the communication frame has been transmitted is referred to as an "activation reference time Tt". Communication frames are sequentially transferred on the field network 2.

Each of the field devices 500 (including the robot controller 530 and the servo drivers 520A and 520B) connected to the field network 2 executes an input data transmission process including, for example, collection of input data to be transmitted to the control device 100 in advance before arrival of the communication frames sequentially transferred on the field network 2.

As the input data transmission process, the robot controller 530 performs collection of commands received by the teaching pendant 200 together with collection of the input data to be transmitted to the control device 100. When the communication frame is reached, the robot controller 530 reads the output data addressed to the robot controller 530 from the received communication frame and writes prepared input data and command to the received communication frame. The robot controller 530 executes an output data reception process including a process of externally outputting a signal corresponding to the read output data.

When each of the servo drivers 520A and 520B receives the communication frames sequentially transferred on the field network 2, each of the servo drivers 520A and 520B reads data addressed to the servo driver from the received communication frames. Each of the servo drivers 520A and 520B executes an output data reception process for externally outputting a signal corresponding to the read output data.

In the time chart illustrated in FIG. 11, timings at which the output data becomes able to be output from the robot controller 530 and the servo drivers 520A and 520B are different from one another. Therefore, in the embodiment, for each of the robot controller 530 and the servo drivers 520A and 520B, a delay time required until the output data included in the communication frame becomes able to be output after designation for transmitting the communication frame is performed in the control device 100 is calculated, and a maximum delay time among the calculated delay times is determined. Then, a time corresponding to the maximum delay time is determined as the output synchronization timing Tout for the entire control system 1.

Thus, in the embodiment, the maximum delay time required until the signal corresponding to the output data becomes able to be output in each field device 500 after the transmission of the output data is requested from the control device 100 is calculated, and the output synchronization timing is determined in consideration of the maximum delay time of the entire system. The timing according to the output synchronization timing is set for the mutually synchronized timers mutually held by the respective field devices 500, and therefore, signals corresponding to the output data are externally output from the respective field devices 500 all at once.

Specifically, the delay time of each field device 500 includes a time required until the communication frame including the output data is transmitted to the field network 2 after a command to transmit the output data is given in the control device 100, a time required for the communication frame including the output data transmitted on the network 2 to be transferred to the field device 500 that is the target, and a time required until a signal corresponding to the received data becomes able to be output from each field device 500 after each field device 500 receives the communication frame including the output data.

For each of the field devices 500 included in the control system 1, a total of the above-described time elements (the delay time for each field device 500) is calculated. A maximum delay time among the delay times is determined as a maximum delay time Dmax.

In the setting of the output synchronization timing Tout, the timers held by the control device 100 and the field device 500 are synchronized with each other. For example, the timer 112 of the control device 100 functions as a grand master clock and the timer 503 of the field device 500 is synchronized with the grand master clock. Accordingly, the control device 100 and the field device 500 can execute various controls and actions according to a common clock. Under such circumstances, the activation reference time Tt set at predetermined periods and the output synchronization timing Tout set with reference to the activation reference time Tt are designated for each field device 500. Each field device 500 executes a designated process at the designated timing.

In the embodiment of the configuration of FIG. 11, a start timing TR1 at which the start of execution of the packing process is triggered is set for the control device 100. Further, the output synchronization timing Tout is set for each of the robot controller 530 and the servo drivers 520A and 520B connected to the control device 100. Thus, in each of the robot controller 530 and the servo drivers 520A and 520B, a timing at which a signal corresponding to the received output data is externally output or updated is instructed.

The calculation and setting of the output synchronization timing as described above may be realized by any one or plurality of calculation subjects. Typically, logic for performing the calculation and setting of the output synchronization timing may be implemented in the control device 100, or a function for performing the calculation and setting of the output synchronization timing may be implemented in the teaching pendant 200.

In any of the implementations, the control device 100 instructs a timing at which a signal corresponding to the output data is externally output or updated (the output synchronization timing Tout) to each of the robot controller 530 and the servo drivers 520A and 520B. The output synchronization timing Tout is set with reference to a time (for example, the activation reference time Tt) managed by the timer 112 which is the grand master clock of the control device 100. This is because each of the field devices 500 included in the control system 1 performs time synchronization with the timer 112 which is the grand master clock.

FIG. 12 is a flowchart showing a processing procedure related to the output timing synchronization function in the control system 1 according to the embodiment. An embodiment in which each step is performed by the processor 102 of the control device 100 executing the system program 107 will be described as a typical embodiment with reference to FIG. 12. However, all or some of the following steps may be executed by another unit, the teaching pendant 200, or the like.

Referring to FIG. 12, the processor 102 calculates a delay time for each field device connected to the control device 100, for example, by referring to a configuration stored in the memory 104 (step S100), and determines a maximum delay time among the calculated delay times as the maximum delay time Dmax (step S101).

The processor 102 determines the output synchronization timing Tout in the entire control system 1 on the basis of the maximum delay time Dmax determined in step S101 (step S102).

The processor 102 notifies each field device 500 of the output synchronization timing Tout determined in step S102 (step S103). Each field device 500 sets a necessary timing according to the notification from the control device 100.

Through the above process, a setting necessary for the output timing synchronization function is completed. Each field device 500 constituting the control system 1 repeatedly executes the process according to the set timing.

### (g2: Process related to output timing synchronization function (Part 2))

The configuration in which the command from the teaching pendant 200 is transmitted to the field device 500 that is the target using the communication frame which is the I/O refreshing frame during the period in which I/O refreshing process is executed has been described with reference to FIGS. 11 and 12, the command from the teaching pendant 200 may be transmitted to the field device 500 that is the target using message communication during a period other than the period in which the I/O refreshing process is executed.

As described above, in the control system 1 according to the embodiment, the timers incorporated in the control device 100 and the field device 500 are kept in a state in which the timers are synchronized with each other. Therefore, the plurality of respective driving devices that have received the command from the teaching pendant 200 can synchronize the output timings with one another on the basis of the timers synchronized with one another.

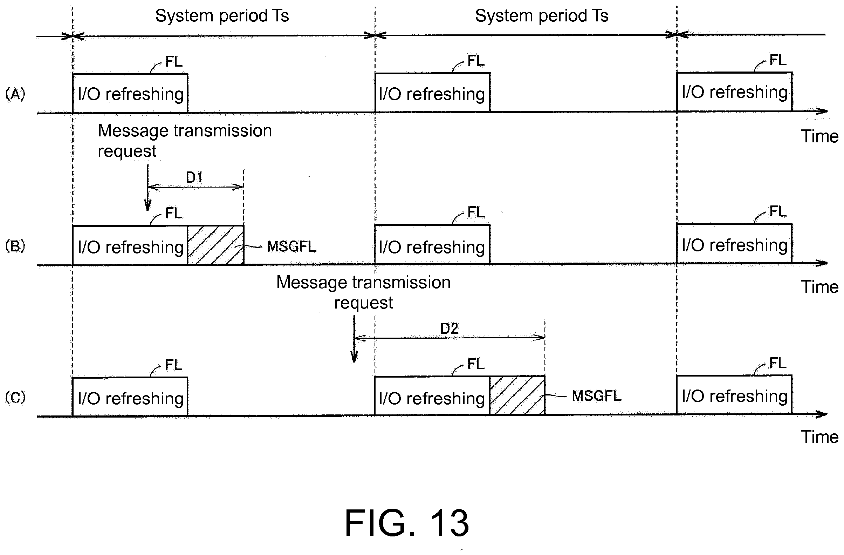

Schematic diagrams (A) to (C) of FIG. 13 illustrate an embodiment in which a command from the teaching pendant 200 is communicated as a message, in addition to the I/O refreshing repeatedly executed at predetermined periods.

Specifically, as illustrated in schematic diagram (A) of FIG. 13, a communication frame FL for I/O refreshing is sent at predetermined system periods Ts via the field network 2. Typically, the communication frame FL is transmitted from the control device 100 and sequentially transferred to the adjacent field devices 500. Data can also be transmitted through any message communication during a period in which such a communication frame FL to be repeatedly transmitted at predetermined periods is not being transferred. For a message frame MSGFL thereof, there are a case in which a command is transferred from the teaching pendant 200 to the driving device that is a target, a case in which a command is transferred from the driving device to which the teaching pendant 200 is connected to the driving device that is the target, and a case in which a command is transferred from the control device 100 to the driving device that is the target.

However, since the communication frame FL and the message frame MSGFL cannot be transmitted at the same time, generation and transmission of a designated message frame MSGFL are delayed when the I/O refreshing is in progress even when a request for transmission of the message frame MSGFL is issued.

For example, it is assumed that a message transmission request is given during the transfer of the communication frame FL for I/O refreshing, as illustrated in schematic diagram (B) of FIG. 13. In this case, the message frame MSGFL is generated and transmitted after transfer of the communication frame FL is completed. In the embodiment illustrated in schematic diagram (B) of FIG. 13, the transmission of the message frame MSGFL is started after a delay time D1 since the message transmission request has been given.

Further, when the message transmission request is given immediately before transfer of the communication frame FL for I/O refreshing, a transfer period of the communication frame FL is approaching. Therefore, the generation and transmission of the message frame MSGFL are hindered and the message frame MSGFL is generated and transmitted after completion of the transfer of the subsequent communication frame FL, as illustrated in schematic diagram (C) of FIG. 13. In the embodiment illustrated in schematic diagram (C) of FIG. 13, the transmission of the message frame MSGFL is started after a delay time D2 since the message transmission request has been given.

Thus, in the field network 2 over which the communication frame FL for performing the I/O refreshing is periodically transmitted, a transmission delay occurs to some extent before the message frame MSGFL is actually transmitted after the message transmission request is given. Further, when a large number of message transmission requests are given, a transmission delay of the message frame MSGFL occurs according to, for example, the number of transmission requests.

Therefore, when a command is transmitted from the teaching pendant 200 to each of the plurality of driving devices using message communication, there is concern that timings at which the output data become able to be output from the plurality of respective driving devices may be different from one another. Therefore, by writing a timing (an output synchronization timing) at which a signal corresponding to the output data is to be externally output or updated to the message frame MSGFL to be transmitted to each driving device together with the command from the teaching pendant 200, each driving device is notified of the output synchronization timing. It should be noted that the output synchronization timing may be notified in the form of a count value or a clock value.

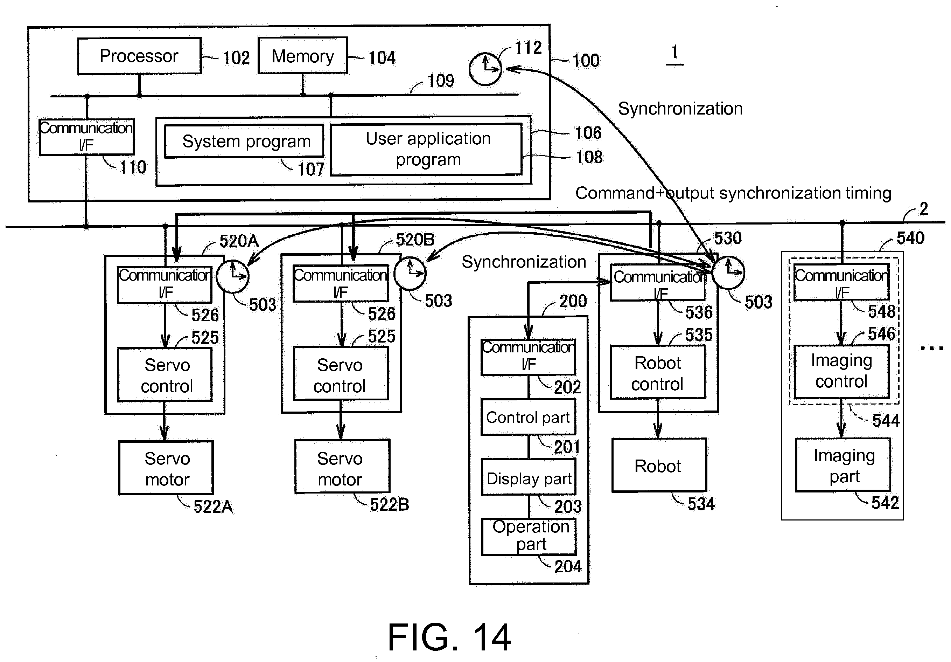

FIG. 14 is a schematic diagram illustrating an output timing synchronization function using message communication. An embodiment in which a command is transmitted from the robot controller 530 to which the teaching pendant 200 is connected, to the servo drivers 520A and 520B using message communication is illustrated in FIG. 14.

Referring to FIG. 14, the control device 100 functioning as a master, and the servo drivers 520A and 520B and the robot controller 530 connected to the control device 100 via the field network 2 include timers synchronized with one another. Specifically, the control device 100 includes the timer 112 which is a grand master clock, and each of the servo drivers 520A and 520B and the robot controller 530 includes the timer 503 synchronized with the timer 112.

The communication I/F of each of the servo drivers 520A and 520B and the robot controller 530 manages data transmission and reception with reference to the timing indicated by the timer 503. FIG. 14 illustrates a case in which the command from the teaching pendant 200 is transmitted to the servo drivers 520A and 520B via the robot controller 530 using message communication. In this case, the robot controller 530 notifies the servo drivers 520A and 520B of the output synchronization timing. Each of the servo drivers 520A and 520B externally outputs or updates a signal corresponding to the received output data according to the notified output synchronization timing.

### <H. Monitoring function of control system>

Next, a monitoring function using the teaching pendant 200 provided by the control system 1 according to the embodiment will be described.

In the data communication in the control system 1 according to the embodiment, when the visual sensor 540 receives the communication frame, the visual sensor 540 writes the image data captured by the imaging part 542 to the received communication frame. For example, in the embodiment of the configurations illustrated in FIGS. 4 and 7, when the visual sensor 540 receives the communication frame, the visual sensor 540 writes the image data collected from the imaging part 542 to the area allocated to the field device 500 to which the teaching pendant 200 is connected. When the field device 500 receives the communication frame, the field device 500 reads the image data stored in the area allocated to the field device 500, and transmits the read image data to the teaching pendant 200. The teaching pendant 200 displays the received image data on the display part 203.

Alternatively, in the embodiments of a configurations illustrated in FIGS. 5 and 6, when the visual sensor 540 receives the communication frame, the visual sensor 540 writes the image data collected from the imaging part 542 to the area allocated to the teaching pendant 200. When the teaching pendant 200 receives the communication frame, the teaching pendant 200 reads the image data stored in the area allocated to the teaching pendant 200 and displays the read image data on the display part 203.

Thus, the teaching pendant 200 receives the image data from the visual sensor 540 via the field network 2, and causes the display part 203 to display the received image data. Accordingly, the user can give a command to the driving device that is a control target while monitoring the behavior of the machine or facility that is a control target. For example, in a robot that grips and moves a workpiece on a stage, the user may be unable to visually see a behavior of an end effector of the robot. In such a case, by imaging the behavior of the end effector using the visual sensor 540, the user can give a command to a robot controller that drives the robot while confirming the behavior of the end effector displayed on the display part 203 of the teaching pendant 200.

However, since, for example, the driving device or a reception buffer of the teaching pendant 200 that receives the image data is affected by device-specific performance, a size of data that can be transmitted at one time may also be limited. In such a case, a transmission part of the data size of the image data to be transmitted is reduced. That is, the size of the image data to be transmitted at one time is reduced, and the entire data is transmitted at a larger number of divided transmission times. Thus, when a maximum size that can be received by a driving device on the reception side or the teaching pendant 200 is small, a transmission part of a transmission size is reduced.

### <I. Safety function of control system>

Next, a safety function provided by the control system 1 according to the embodiment will be described.

For example, when an abnormality is detected in a behavior of the control target during execution of a monitoring operation using the visual sensor 540 described above, the user operates the emergency stop button 205 (see FIG. 2) provided in the teaching pendant 200 such that the driving device that is the control target can be emergently stopped.

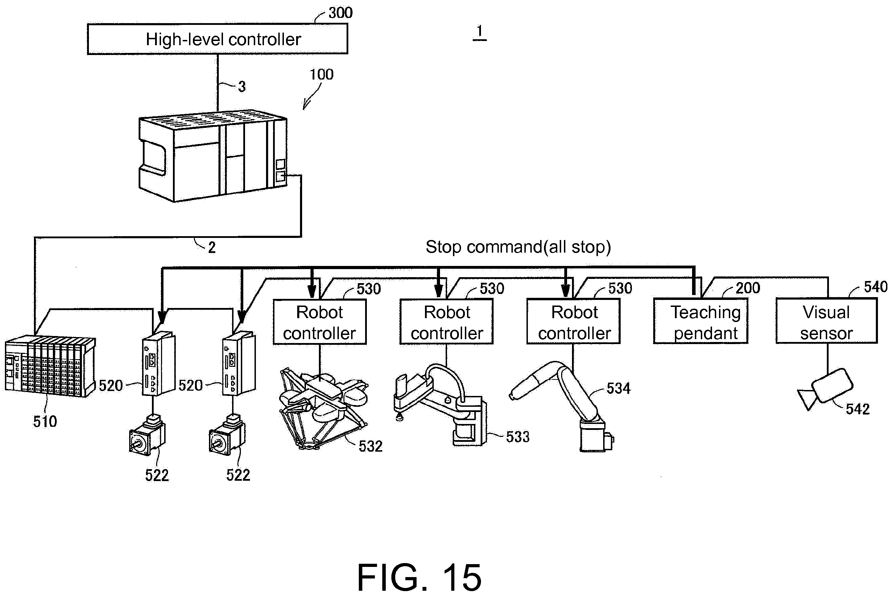

FIG. 15 is a schematic diagram illustrating an embodiment of emergency stop process in the control system 1 according to the embodiment. In the embodiment illustrated in FIG. 15, when the emergency stop button 205 of the teaching pendant 200 is operated, a stop command is given to the plurality of driving devices included in the control system 1. Accordingly, all of the plurality of driving devices are stopped.

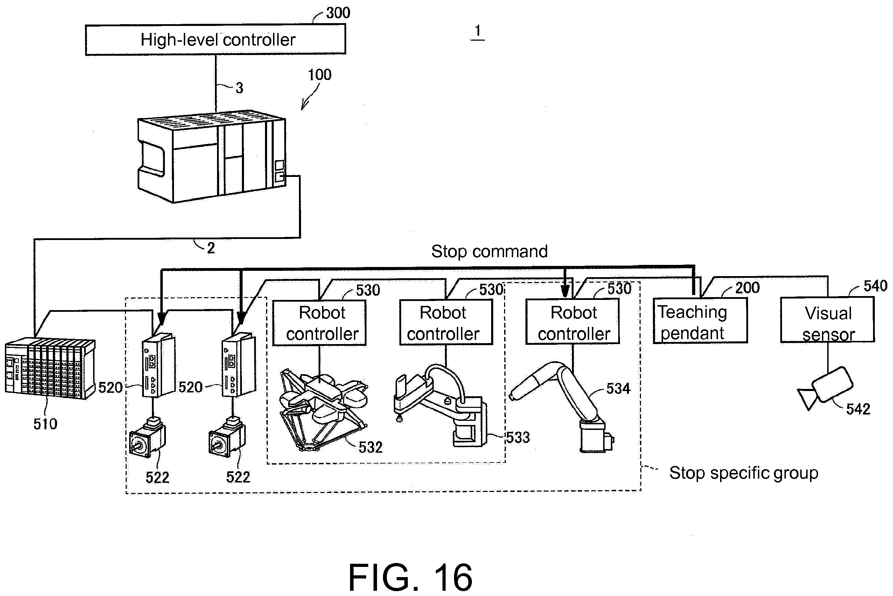

FIG. 16 is a schematic diagram illustrating another embodiment of the emergency stop process in the control system 1 according to the embodiment. In the embodiment illustrated in FIG. 16, when the emergency stop button 205 of the teaching pendant 200 is operated, a stop command is given to a specific driving device. Accordingly, only the specific driving device is stopped. The specific driving device includes one or a plurality of driving devices, and can be set for the teaching pendant 200 by the user in advance. Alternatively, it is possible to set a plurality of driving devices of which control timings are synchronized with one another, such as the articulated robot 534 and the stage 750 (the servo motors 522A and 522B) illustrated in FIG. 10, as the specific driving devices.

Thus, in the control system 1 according to the embodiment, when the emergency stop button 205 in the teaching pendant 200 is operated, the stop command is given to the plurality of driving devices using the field network 2. Therefore, the plurality of driving devices can be stopped rapidly at the time of detection of the abnormality.

Further, when a configuration in which the stop command is given to the specific driving device among the plurality of driving devices is adopted, it is possible to suppress an influence on a manufacturing facility or a production line by stopping only driving devices in which there is concern that a harmful effect is caused due to an abnormality.

### <J. Operation confirmation function of control system>

Next, an operation confirmation function using the teaching pendant 200 provided by the control system 1 according to the embodiment will be described.

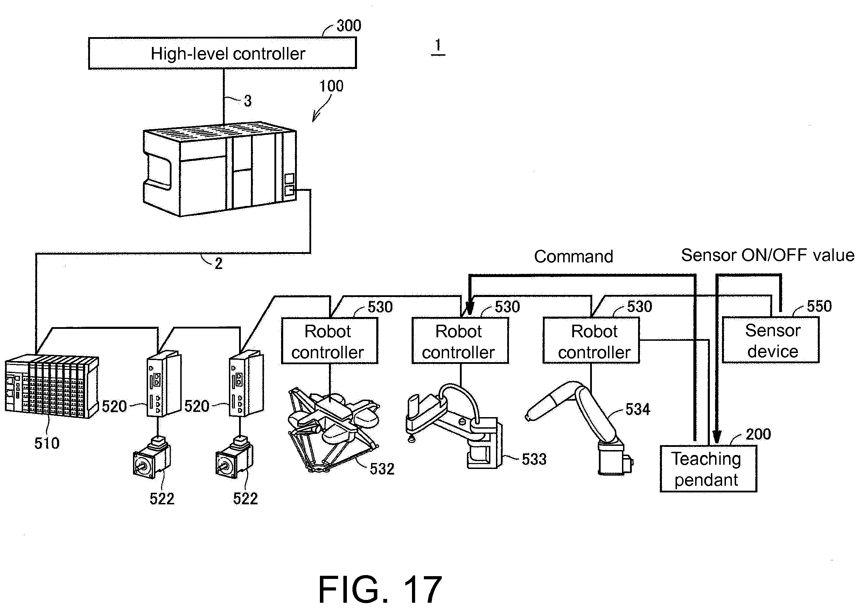

FIG. 17 is a schematic diagram illustrating an embodiment of an operation confirmation process in the control system 1 according to the embodiment. In the embodiment illustrated in FIG. 17, the teaching pendant 200 outputs a command corresponding to a user operation to the robot controller 530. This command includes a position command indicating a target position of a robot 533, a speed command indicating a target speed of the robot 533, and the like.

During operation of the robot 533, the teaching pendant 200 receives an ON/OFF value output from a sensor device 550 connected to the field network 2. The sensor device 550 is a device for detecting a state (temperature, displacement, pressure, or the like) of a machine or facility that is a control target, and includes, a temperature sensor, a displacement sensor, a pressure sensor, or the like. The teaching pendant 200 causes the ON/OFF value of the sensor device 550 to be displayed on the display part 203.

For example, in a situation in which a manufacturing facility is designed so that the sensor device 550 outputs an ON value when the robot 33 has moved to a predetermined position, the user operates the operation part 204 to move the robot 533 while monitoring an output value of the sensor device 550 using the display part 203 of the teaching pendant 200. When the user has moved the robot 533 to the predetermined position, the user can confirm that the sensor device 550 correctly outputs the ON value. On the other hand, when the sensor device 550 does not output the ON value, the user can judge that there is a likelihood of the robot 533 having not moved to the predetermined position or there is a likelihood of the sensor device 550 being not normally operating.

Thus, since the teaching pendant 200 can acquire the output of the sensor device 550 via the field network 2, the user can confirm operations of the control target and the sensor device 550 using the teaching pendant 200.

### <K. Collision avoidance function of control system>

Next, a collision avoidance function among a plurality of control targets provided by the control system 1 according to the embodiment will be described.

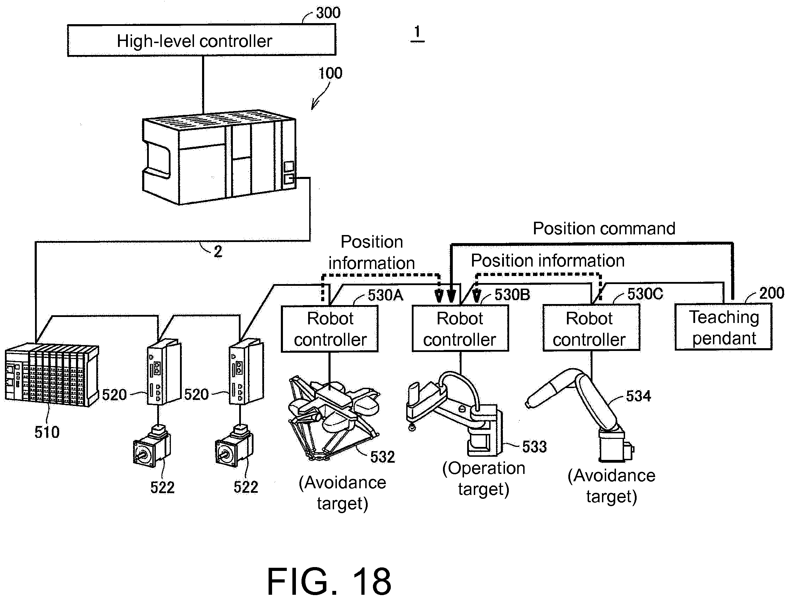

FIG. 18 is a schematic diagram illustrating the collision avoidance function provided by the control system 1 according to the embodiment. FIG. 18 is a schematic diagram illustrating an embodiment of an overall configuration of the control system 1 according to the embodiment.

In the embodiment of a configuration illustrated in FIG. 18, the field device 500 includes a remote I/O device 510, servo drivers 520, servo motors 522, a robot controller 530A, a robot 532, a robot controller 530B, a robot 533, a robot controller 530C, and a robot 534.

Each of the robot controllers 530A to 530C performs trajectory calculation, angle calculation of each axis, or the like according to a position command or the like from the control device 100 and drives a servo motor or the like constituting the corresponding robot according to calculation results. In the embodiment of the configuration illustrated in FIG. 18, the robot 532 is a parallel robot, the robot 533 is a scalar robot, and the robot 534 is an articulated robot.

The teaching pendant 200 is connected to the field network 2. The teaching pendant 200 exchanges data with the field device 500 via the field network 2.

The user can designate the field device 500 that is an operation target by operating the operation part 204 of the teaching pendant 200. The user can further designate the field device 500 that is an avoidance target by operating the operation part 204 of the teaching pendant 200. The field device 500 that is the operation target corresponds to a machine or facility that the user desires to operate and a driving device that drives the machine or facility. The field device 500 that is the avoidance target corresponds to a machine or facility that is likely to collide with the machine or facility that is the operation target and a driving device that drives the machine or facility when the machine or facility that is the operation target is caused to move to a target position.

In the embodiment of a configuration illustrated in FIG. 18, the robot 533 and the robot controller 530B are designated as the field devices 500 that are the operation targets. The robot 532, the robot controller 530A, the robot 534, and the robot controller 530C are specified as the field devices 500 that are avoidance targets.

Although, for the designation of the field devices 500 that are avoidance targets, the configuration in which the user inputs the field device 500 that is the operation target and the field devices 500 that are the avoidance targets to the teaching pendant 200 has been exemplified, a configuration in which the teaching pendant 200 may automatically designate the field device 500 that are avoidance targets on the basis of the field device 500 that is the operation target designated by the user may be adopted. For example, the teaching pendant 200 can designate a robot (or a servo motor) that is a target of synchronization control for synchronizing an operation timing with the robot 533, and a driving device thereof as the field devices 500 that are the avoidance targets from configuration information of the control system 1 registered in advance.

Referring to FIG. 18, the robot controller 530B designated as the operation target receives the position command indicating the target position of the robot 533 from the teaching pendant 200. The target position of the robot 533 indicates a target position of each of a plurality of axes associated with a plurality of respective arms included in the robot 533. The position of the robot 533 is determined from the target position of each axis.

Each of the plurality of arms of the robot 533 is driven by a servo motor. When the robot controller 530B receives the position command from the teaching pendant 200, the robot controller 530B determines the amount of rotation of each servo motor on the basis of the target position indicated by the received position command and outputs a designation value for designating the determined amount of rotation to each servo motor.

The robot controller 530B further receives position information indicating the position of the robot 532 from the robot controller 530A designated as an avoidance target and also receives position information indicating the position of the robot 534 from the robot controller 530C. The position information of each robot indicates a current position of each of a plurality of axes associated with a plurality of arms included in each robot. The robot controller 530B reads, for example, the input data stored in the area allocated to the robot controller that is the avoidance target from the communication frame repeatedly transferred at predetermined system periods Ts, such that the position information of the robot that is the avoidance target can be acquired.

Next, the robot controller 530B determines a likelihood of collision between the robot 533 that is the operation target and each of the robots 532 and 534 that are the avoidance targets on the basis of the target position and the current position of the robot 533 that is the operation target and the current position of the robots 532 and 534 that are the avoidance targets.

Specifically, the robot controller 530B determines whether or not a relative positional relationship between the robot 533 that is the operation target and each of the robots 532 and 534 that are the avoidance targets is a specific positional relationship. This specific positional relationship includes that a distance between the target position of the robot that is the operation target and the current position of the robot that is the avoidance target is equal to or smaller than a threshold value. The specific positional relationship also includes that a shortest distance between a trajectory connecting the current position of the robot that is the operation target to the target position thereof and the current position of the robot that is the avoidance target is equal to or smaller than a threshold value. It should be noted that the specific positional relationship is not limited to these positional relationships.

When the relative positional relationship between the robot 533 that is the operation target and each of the robots 532 and 534 that are the avoidance targets is any specific positional relationship, the robot controller 530B determines that there is a likelihood of collision between the robot 533 that is the operation target and the robots 532 and 534 that are the avoidance targets. On the other hand, when the relative positional relationship between the robot 533 that is the operation target and each of the robots 532 and 534 that are the avoidance targets is not the specific positional relationship, the robot controller 530B determines that there is no likelihood of collision between the robot 533 that is the operation target and the robots 532 and 534 that are the avoidance targets.

When it is determined that there is a likelihood of collision between the robot 533 that is the operation target and the robots 532 and 534 that are the avoidance targets, the robot controller 530B shifts to a mode for avoiding the collision in advance (a collision avoidance mode).

In the embodiment, the robot controller 530B can select a "subject-robot stop mode" in which the operation of the subject robot is stopped and an "other-robot avoidance mode" in which the robot that is an avoidance target is moved to a position at which collision with the subject robot can be avoided, as the collision avoidance modes.

In the subject-robot stop mode, the robot controller 530B stops the robot 533 that is the operation target at the current position without moving the robot 533 to the target position. In this case, the user is notified, via the teaching pendant 200, that commands cannot be executed since there is a likelihood of collision with the robots 532 and 534 that are the avoidance targets.

On the other hand, in the other-robot avoidance mode, the robot controller 530B notifies the control device 100 of a collision avoidance command for moving the robots 532 and 534 that are the avoidance targets to positions at which the collision can be avoided. When the control device 100 receives the collision avoidance command, the control device 100 generates a correction command for correcting the position of the robot 532 that is the avoidance target and outputs the generated correction command to the robot controller 530A. Further, the control device 100 generates a correction command for correcting the position of the robot 534 that is the avoidance target and outputs the generated correction command to the robot controller 530C. It should be noted that the driving device of the robot likely to collide among the robots that are the avoidance targets may be notified of the collision avoidance command.

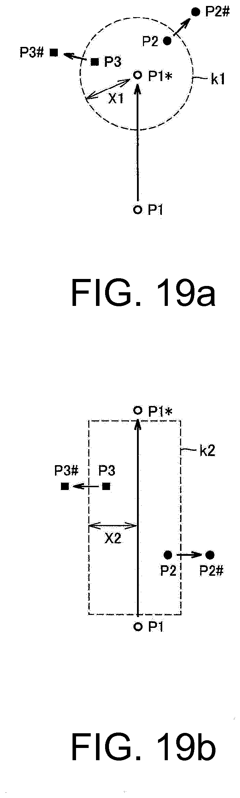

FIG. 19a and FIG. 19b are schematic diagrams illustrating the other-robot avoidance mode in the control system 1 according to the embodiment. It should be noted that the current position of the robot 533 that is the operation target is denoted as P1 and the target position is denoted as P1* for convenience of description in FIG. 19a and FIG. 19b. Further, the current positions of the robots 532 and 533 that are avoidance targets are denoted as P2 and P3, respectively.

As illustrated in FIG. 19a, when a distance between the target position P1* of the robot 533 that is the operation target and the current position P2 of the robot 532 that is the avoidance target is equal to or smaller than a threshold value X1, the relative positional relationship between the robot 533 that is the operation target and the robot 532 that is the avoidance target is a specific positional relationship, and therefore, it is determined that there is a likelihood of collision between the robot 533 that is the operation target and the robot 532 that is the avoidance target. Similarly, when the distance between the target position P1* of the robot 533 that is the operation target and the current position P3 of the robot 534 that is the avoidance target is equal to or smaller than the threshold value X1, the relative positional relationship between the robot 533 that is the operation target and the robot 534 that is the avoidance target is a specific positional relationship, and therefore, it is determined that there is a likelihood of collision between the robot 533 that is the operation target and the robot 532 that is the avoidance target.

Therefore, when the control device 100 receives the collision avoidance command for the robots 532 and 534 from the robot controller 530B, the control device 100 calculates a corrected position for each of the robots 532 and 534. In the embodiment illustrated in FIG. 19a, a position P2# that is outside a range of a circular region k1 with the target position P1* as a center and a threshold value X1 as a radius and in which a distance between the position P2# and the current position P2 of the robot 532 is equal to or smaller than a predetermined value is set as the corrected position of the robot 532. Further, a position P3# that is outside the range of the region k1 and in which a distance between the position P3# and the current position P3 of the robot 534 is equal to or smaller than a predetermined value is set as the corrected position of the robot 534.

FIG. 19b illustrates a case in which a shortest distance between a trajectory (corresponding to a solid line arrow in FIG. 19b) connecting the current position P1 of the robot 533 that is the operation target to the target position P1* and the current position of each of the robots 532 and 534 that are the avoidance targets is equal to or smaller than a threshold value X2. In such a case, since the relative positional relationship between the robot 533 that is the operation target and the robots 532 and 534 that are the avoidance targets is a specific positional relationship, it is determined that there is a likelihood of collision between the robot 533 that is the operation target and the robots 532 and 534 that are the avoidance targets.

When the control device 100 receives the collision avoidance command for the robots 532 and 534 from the robot controller 530B, the control device 100 calculates a corrected position for each of the robots 532 and 534. In the embodiment illustrated in FIG. 19b, a position P2# that is outside a range of a region k2 in which a shortest distance between the region k2 and a trajectory connecting the current position P1 to the target position P1* is equal to or smaller than the threshold value X2 and in which a distance between the position P2# and the current position P2 of the robot 532 is equal to or smaller than a predetermined value is set as the corrected position of the robot 532. Further, a position P3# that is outside the range of the region k2 and in which a distance between the position P3# and the current position P3 of the robot 534 is equal to or smaller than a predetermined value is set as the corrected position of the robot 534.

The control device 100 outputs a correction command including the corrected position P2# of the robot 532 to the robot controller 530A and outputs a correction command including the corrected position P3# of the robot 534 to the robot controller 530C. The robot controller 530A moves the robot 532 to the corrected position P2# according to the correction command. The robot controller 530C moves the robot 534 to the corrected position P3# according to the correction command.

Thus, in the other-robot avoidance mode, the robots 532 and 534 that are the avoidance targets are moved to positions at which the collision with the robot 533 that is the operation target can be avoided. The robot 533 that is the operation target is stopped at the current position and enters a standby state while avoidance operations of the robots 532 and 534 that are the avoidance targets are being performed.

When there becomes no likelihood of the collision between the robot 533 that is the operation target and the robots 532 and 534 that are the avoidance targets due to the completion of the avoidance operations of the robots 532 and 534 that are the avoidance targets, the robot controller 530B moves the robot 533 to the target position P1*. When the robot 533 is moved to the target position P1#, the robot controller 530B notifies the teaching pendant 200 of an operation completion.

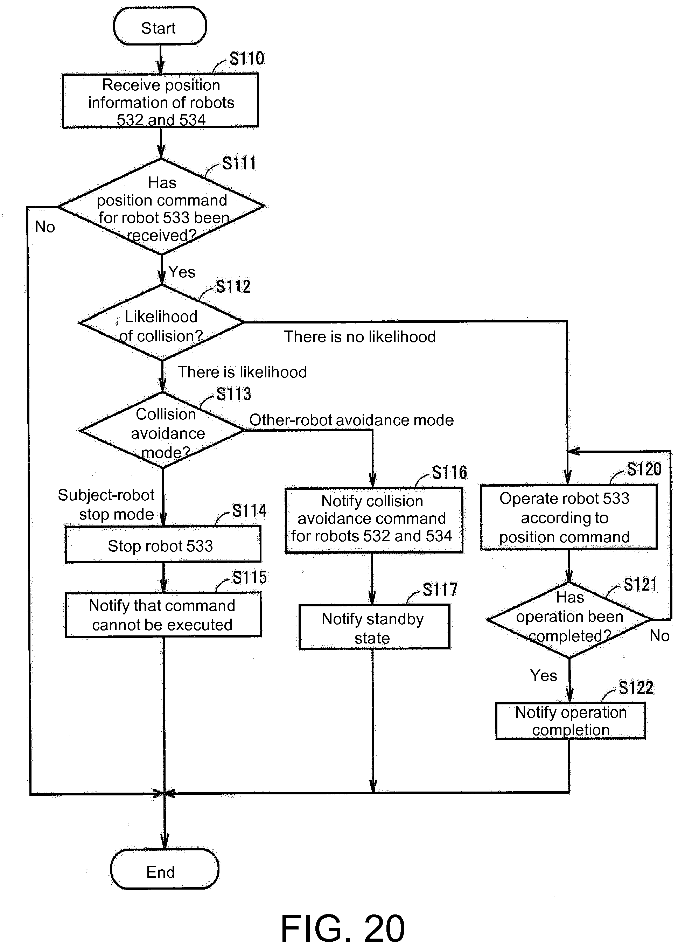

FIG. 20 is a flowchart showing a processing procedure of the collision avoidance function in the control system 1 according to the embodiment. The flowchart illustrated in FIG. 20 is repeatedly executed at predetermined system periods Ts by the field device 500 designated as the operation target.

A processing procedure of the collision avoidance function applied to the embodiment of the configuration illustrated in FIG. 18 is illustrated in FIG. 20. It should be noted that the field devices 500 (the robot controller 530B and the robot 533), which are operation targets, are designated by the user prior to the processing procedure illustrated in FIG. 20. Further, the field devices 500 (the robot controller 530A, the robot 532, the robot controller 530C, and the robot 534), which are avoidance targets, are designated by the user or the teaching pendant 200.

Referring to FIG. 20, the robot controller 530B designated as the operation target receives position information of the robots 532 and 534 output from robot controllers 530A and 530B designated as avoidance targets (step S110).

The robot controller 530B determines whether or not a position command for the robot 533 that is the operation target has been received from the teaching pendant 200 (step 5111). When the position command has not been received from the teaching pendant 200 (when NO is determined in S111), the robot controller 530B skips subsequent processes S112 to S122 and ends the process.

On the other hand, when the position command for the robot 533 has been received from the teaching pendant 200 (when YES is determined in S111), the robot controller 530B determines a likelihood of collision between the robot 533 that is the operation target and the robots 532 and 534 that are the avoidance targets (Step S112). The robot controller 530B determines whether there is a likelihood of the collision on the basis of the current position and the target position of the robot 533 that is the operation target and the current positions of the robots 532 and 534 that are the avoidance target.

When it is determined in step S112 that there is no likelihood of collision (when NO is determined in S112), the robot controller 530B moves the robot 533 according to the position command from the teaching pendant 200 (step S120). When the robot 533 moves to the target position, the robot controller 530B determines that the operation of the robot 533 has been completed (when YES is determined in S121) and notifies the teaching pendant 200 of the completion of the operation (step S122). The teaching pendant 200 having received the notification causes the notification to be displayed on the display part 203, thereby informing the user of the completion of the operation of the robot 533.

On the other hand, when it is determined in step S112 that there is a likelihood of collision (when YES is determined in S112), the robot controller 530B shifts to the collision avoidance mode. First, the robot controller 530B determines which of the subject-robot stop mode and the other-robot avoidance mode is selected as the collision avoidance mode (step S113).

When the subject-robot stop mode is selected, the robot controller 530B stops the execution of the position command for the robot 533 to cause the robot 533 to enter a stopped state (step S114) and notifies the teaching pendant 200 that the command cannot be executed (step S115). The teaching pendant 200 having received the notification causes the notification to be displayed on the display part 203, to inform the user that the robot 533 cannot be moved due to there being a likelihood of collision with a device that is an avoidance target.

On the other hand, when the other-robot avoidance mode is selected in step S113, the robot controller 530B notifies the control device 100 of a collision avoidance command for the robots 532 and 534 (step S116). Further, the robot controller 530B notifies the teaching pendant 200 that the robot 533 is in a standby state in order to execute the other-robot avoidance mode (step S117). The teaching pendant 200 causes the display part 203 to display that the robot 533 is in the standby state. The standby state of the robot 533 is released when the robot controller 530B determines that there is no likelihood of collision.

When the control device 100 receives the collision avoidance command from the robot controller 530B in step S116, the control device 100 calculates corrected positions of the respective robots 532 and 534 on the basis of the current position and the target position of the robot 533, for the respective robots 532 and 534. The control device 100 outputs a correction command including the calculated corrected positions to the robot controllers 530A and 530C. When each of the robot controllers 530A and 530C receives the correction command, each of the robot controllers 530A and 530C moves the corresponding robot to the corrected position instructed by the correction command.

### <L. Conclusion>

According to the embodiment, in the control system in which the plurality of driving devices and the control device for controlling the driving devices are connected via the network, the teaching device can transmit commands to the plurality of driving devices at the same time using the network. Accordingly, it is possible to perform teaching on the plurality of driving devices at the same time using a single teaching device. Therefore, it is possible to improve work efficiency as compared to the configuration of the related art in which driving devices that are teaching targets are selected one by one and teaching is performed.

Further, since the plurality of driving devices are connected to a so-called industrial network, the number of connectable driving devices is not restricted by hardware of the control device, unlike the configuration of the related art. For a model of the driving device, since the driving device can be connected as long as the driving device can be connected to the industrial network, the model is not restricted by the hardware of the control device.

Further, according to the embodiment, since the teaching device can give commands to the plurality of driving devices at the same time, it is possible to operate the plurality of driving devices of which the operation timings are required to be synchronized with one another at the same time and perform teaching.

Further, according to the embodiment, the teaching device can receive the image obtained by imaging the behavior of the control target from the visual sensor connected to the network, and cause the image to be displayed. Accordingly, the user can give a command to the driving device that is a control target while monitoring the behavior of the machine or facility that is the control target displayed on the teaching device. Thus, the user can teach the behavior of the control target difficult to visually see to the driving device.

Further, according to the embodiment, it is possible to output the stop command given from the teaching device to the plurality of driving devices via the network in an emergency state. As a result, it is possible to emergently stop the plurality of driving devices. The teaching device can emergently stop only a specific driving device set in advance by outputting the stop command only to the specific driving device.

Further, according to the embodiment, since data can be exchanged between the control device and the plurality of driving devices via the network, the driving device that is the target can determine a likelihood of collision between the subject device and the other driving device on the basis of the relative positional relationship between the subject device and the other driving device in a situation in which a command is given from the teaching device to the driving device that is the target. Further, when it is determined that there is a likelihood of collision, the control device, the driving device that is the target, and the other driving device can execute the process for avoiding collision in cooperation with one another.

### [Reference Signs List]

1 Control system
2 Field network
3 High-level network
100 Control device
102 Processor
104 Memory
106 Storage
107 System program
108 User application program
109 Bus
112, 209, 503 Timer
114, 202, 206, 207, 504, 505, 508, 514, and 601 to 603 Communication port
116, 208, 506, 604 Transmission and reception controller
200 Teaching pendant
201 Control part
203 Display part
204 Operation part
205 Emergency stop button
300 Server device
400 Display device
509, 605 Communication line
510 Remote I/O device
511 Communication control part
515, 600 Switch
520, 520A, 520B Servo driver
522, 522A, 522B Servo motor
525 Servo control part
530, and 530A to 530C Robot controller
532 to 534 Robot
535 Robot control part
537 End effector
540 Visual sensor
542 Imaging part
544 Image processing part
546 Imaging control part
550 Sensor device
750 Stage

## Claims

1. A control system (1) for controlling a plurality of control targets (522, 532 to 534), the control system (1) comprising:
a plurality of driving devices (500, 520, 530, 530A to 530C) that are connected to a network (2) and drive the plurality of control targets (522, 532 to 534);
a control device (100) that controls the plurality of driving devices (500, 520, 530, 530A to 530C) via the network (2); and
a teaching device (200) for teaching operations of corresponding control targets to the plurality of driving devices (500, 520, 530, 530A to 530C) at the same time,
wherein the teaching device (200) is configured to transmit commands for driving the corresponding control target to each of the plurality of driving devices (500, 520, 530, 530A to 530C) via the network (2) at the same time, **characterized in that**,
the control device (100) and the plurality of driving devices (500, 520, 530, 530A to 530C) include timers (112, 503) synchronized in time with one another,
the control device (100) is configured to determine a synchronization timing at which a signal corresponding to the command received in each of the plurality of driving devices (500, 520, 530, 530A to 530C) is output, with reference to a time managed by a timer, and
the plurality of driving devices (500, 520, 530, 530A to 530C) drives the corresponding control targets (522, 532 to 534) based on the received commands and the synchronization timing, so that the teaching device (200) teaches the operations of the plurality of control targets (522, 532 to 534) at the same time in a synchronous manner, wherein the plurality of control targets (522, 532 to 534) comprises an articulated robot and servo motors (522A, 522B), wherein the servo motors (522A, 522B) drive an XY stage (750).

2. The control system (1) according to claim 1,
wherein the teaching device (200) is connected to a first driving device among the plurality of driving devices (500, 520, 530, 530A to 530C) via a communication line (509), and configured to output a command for a second driving device among the plurality of driving devices (500, 520, 530, 530A to 530C) to the first driving device, and
the first driving device is configured to transmit the command for the second driving device to the second driving device via the network (2).

3. The control system (1) according to claim 1,
wherein the teaching device (200) is connected to the network (2) and is configured to transmit a command for driving a corresponding control target to a driving device that is a target via the network (2).

4. The control system (1) according to claim 3, wherein the control device (100) is configured to collect command transmitted by the teaching device (200) via the network (2) and to transmit the collected command to the driving device that is the target via the network (2).

5. The control system (1) according to claim 4,
wherein the control device (100) is configured to store the collected command in an area of a communication frame allocated to the driving device that is the target, and to transmit the communication frame via the network (2), and
when the driving device that is the target receives the communication frame, the driving device that is the target is configured to read the command stored in the area allocated to the driving device that is the target.

6. The control system (1) according to claim 1,
wherein
the control device (100) is configured to transmit a communication frame at predetermined intervals via the network (2), and
the teaching device (200) is configured to transmit a command for a driving device that is a target and to instruct a timing at which a signal corresponding to the command received in the driving device that is the target is output during a period in which the communication frame is not transferred.

7. The control system (1) according to claim 1,
wherein when a first driving device among the plurality of driving devices (500, 520, 530, 530A to 530C) is configured to receive a command for driving a corresponding first control target from the teaching device (200), the first driving device is configured to determine a likelihood of collision between the first control target and a second control target due to execution of the command for driving the corresponding first control target, and
when it is determined that there is a likelihood of collision, the first driving device is configured to stop the execution of the command for driving the corresponding first control target and to notify the teaching device (200) that the command for driving the corresponding first control target is unable to be executed.

8. The control system (1) according to claim 1,
wherein when a first driving device among the plurality of driving devices (500, 520, 530, 530A to 530C) is configured to receive a command for driving a corresponding first control target from the teaching device (200), the first driving device determines a likelihood of collision between the first control target and a second control target due to execution of the command for driving the corresponding first control target, and to transmit a collision avoidance command for a second driving device that is configured to drive the second control target to the control device (100) via the network (2) when it is determined that there is a likelihood of collision, and
the control device (100) is configured to transmit a command including a corrected position of the second control target to the second driving device via the network (2) when the control device (100) is configured to receive the collision avoidance command.

9. The control system (1) according to claim 1, further comprising a visual sensor (540) including an imaging part (542) connected to the network (2) and disposed to image the plurality of control targets (522, 532 to 534),
wherein the teaching device (200) includes
a display part (203) that is configured to display an image captured by the imaging part (542), the image being transferred from the visual sensor (540) via the network (2), and
an operation part (204) that is configured to receive an operation for inputting a command for a driving device that is a target.

10. The control system (1) according to claim 1, wherein the teaching device (200) includes an operation part (204) that is configured to receive an operation for inputting a stop command, and to transmit the stop command to at least one driving device among the plurality of driving devices (500, 520, 530, 530A to 530C) via the network (2).

11. The control system (1) according to claim 1, further comprising: a sensor device (550) that is connected to the network (2) and configured to detect states of the plurality of control targets (522, 532 to 534),
wherein the teaching device (200) is configured to receive an output value of the sensor device (550) via the network (2).

## Patentansprüche

1. Steuerungssystem (1) zum Steuern einer Vielzahl von Steuerzielen (522, 532 bis 534), wobei das Steuerungssystem (1) umfasst:
eine Vielzahl von Antriebsvorrichtungen (500, 520, 530, 530A bis 530C), die mit einem Netzwerk (2) verbunden sind und die Vielzahl von Steuerzielen (522, 532 bis 534) antreiben;
eine Steuervorrichtung (100), die die Vielzahl von Antriebsvorrichtungen (500, 520, 530, 530A bis 530C) über das Netzwerk (2) steuert; und
eine Lehrvorrichtung (200) zum gleichzeitigen Lehren von Vorgängen von entsprechenden Steuerzielen an die Vielzahl von Antriebsvorrichtungen (500, 520, 530, 530A bis 530C),
wobei die Lehrvorrichtung (200) konfiguriert ist, Befehle zum Antreiben des entsprechenden Steuerziels über das Netzwerk (2) gleichzeitig an jede der Vielzahl von Antriebsvorrichtungen (500, 520, 530, 530A bis 530C) zu übertragen,
**dadurch gekennzeichnet, dass** die Steuervorrichtung (100) und die Vielzahl von Antriebsvorrichtungen (500, 520, 530, 530A bis 530C) Zeitgeber (112, 503) enthalten, die zeitlich miteinander synchronisiert sind,
die Steuervorrichtung (100) konfiguriert ist, um einen Synchronisationszeitpunkt zu bestimmen, zu dem ein Signal, das dem Befehl, empfangen in jeder der Vielzahl von Antriebsvorrichtungen (500, 520, 530, 530A bis 530C) entspricht, unter Bezugnahme auf eine von einem Zeitgeber verwaltete Zeit ausgegeben wird, und
die Vielzahl von Antriebsvorrichtungen (500, 520, 530, 530A bis 530C) die entsprechenden Steuerziele (522, 532 bis 534) basierend auf den empfangenen Befehlen und dem Synchronisationszeitpunkt antreibt, so dass die Lehrvorrichtung (200) die Vorgänge der Vielzahl von Steuerzielen (522, 532 bis 534) zur gleichen Zeit in einer synchronen Weise lehrt, wobei die Vielzahl von Steuerzielen (522, 532 bis 534) einen frei beweglichen Roboter (534) und Servomotoren (522A, 522B) umfasst, wobei die Servomotoren (522A, 522B) eine XY-Plattform (750) antreiben.

2. Steuerungssystem (1) gemäß Anspruch 1,
wobei die Lehrvorrichtung (200) mit einer ersten Antriebsvorrichtung aus der Vielzahl von Antriebsvorrichtungen (500, 520, 530, 530A bis 530C) über eine Kommunikationsleitung (509) verbunden ist und konfiguriert ist, um einen Befehl für eine zweite Antriebsvorrichtung aus der Vielzahl von Antriebsvorrichtungen (500, 520, 530, 530A bis 530C) an die erste Antriebsvorrichtung auszugeben, und
die erste Antriebsvorrichtung konfiguriert ist, um den Befehl für die zweite Antriebsvorrichtung über das Netzwerk (2) an die zweite Antriebsvorrichtung zu übertragen.

3. Steuerungssystem (1) gemäß Anspruch 1,
wobei die Lehrvorrichtung (200) mit dem Netzwerk (2) verbunden ist und konfiguriert ist, um über das Netzwerk (2) einen Befehl zum Antreiben eines entsprechenden Steuerziels an eine Antriebsvorrichtung, die ein Ziel ist, zu übertragen.

4. Steuerungssystem (1) gemäß Anspruch 3, wobei die Steuervorrichtung (100) konfiguriert ist, um den Befehl, übertragen von der Lehrvorrichtung (200) über das Netzwerk (2), zu sammeln und um den gesammelten Befehl über das Netzwerk (2) an die Antriebsvorrichtung, die das Ziel ist, zu übertragen.

5. Steuerungssystem (1) gemäß Anspruch 4,
wobei die Steuervorrichtung (100) konfiguriert ist, um den gesammelten Befehl in einem Bereich eines Kommunikationsrahmens zu speichern, der der Antriebsvorrichtung, die das Ziel ist, zugeordnet ist, und um den Kommunikationsrahmen über das Netzwerk (2) zu übertragen, und
wenn die Antriebsvorrichtung, die das Ziel ist, den Kommunikationsrahmen empfängt, die Antriebsvorrichtung, die das Ziel ist, konfiguriert ist, um den Befehl zu lesen, der in dem Bereich, der der Antriebsvorrichtung zugewiesen ist, die das Ziel ist, gespeichert ist.

6. Steuerungssystem (1) gemäß Anspruch 1,
wobei die Steuervorrichtung (100) konfiguriert ist, um in vorbestimmten Intervallen einen Kommunikationsrahmen über das Netzwerk (2) zu übertragen, und
die Lehrvorrichtung (200) konfiguriert ist, um einen Befehl für eine Antriebsvorrichtung, die ein Ziel ist, zu übertragen und um einen Zeitpunkt vorzugeben, bei dem ein Signal, das dem Befehl entspricht, empfangen in der Antriebsvorrichtung, die das Ziel ist, während einer Zeitspanne, in der der Kommunikationsrahmen nicht übertragen wird, ausgegeben wird.

7. Steuerungssystem (1) gemäß Anspruch 1,
wobei, wenn eine erste Antriebsvorrichtung unter der Vielzahl von Antriebsvorrichtungen (500, 520, 530, 530A bis 530C) konfiguriert ist, um einen Befehl zum Antreiben eines entsprechenden ersten Steuerziels von der Lehrvorrichtung (200) zu empfangen, die erste Antriebsvorrichtung konfiguriert ist, um eine Wahrscheinlichkeit einer Kollision zwischen dem ersten Steuerziel und einem zweiten Steuerziel aufgrund der Ausführung des Befehls zum Antreiben des entsprechenden ersten Steuerziels zu bestimmen, und
wenn bestimmt wird, dass eine Kollisionswahrscheinlichkeit besteht, die erste Antriebsvorrichtung konfiguriert ist, um die Ausführung des Befehls zum Antreiben des entsprechenden ersten Steuerziels zu stoppen und um die Lehrvorrichtung (200) zu benachrichtigen, dass der Befehl zum Antreiben des entsprechenden ersten Steuerziels nicht ausgeführt werden kann.

8. Steuerungssystem (1) gemäß Anspruch 1,
wobei, wenn eine erste Antriebsvorrichtung unter der Vielzahl von Antriebsvorrichtungen (500, 520, 530, 530A bis 530C) konfiguriert ist, um einen Befehl zum Antreiben eines entsprechenden ersten Steuerziels von der Lehrvorrichtung (200) zu empfangen, die erste Antriebsvorrichtung eine Kollisionswahrscheinlichkeit zwischen dem ersten Steuerziel und einem zweiten Steuerziel aufgrund der Ausführung des Befehls zum Antreiben des entsprechenden ersten Steuerziels bestimmt und um einen Kollisionsvermeidungsbefehl für eine zweite Antriebsvorrichtung zu übertragen, die konfiguriert ist, um das zweite Steuerziel, über das Netzwerk (2) an die Steuervorrichtung (100) anzutreiben, wenn bestimmt wird, dass eine Kollisionswahrscheinlichkeit besteht, und
die Steuervorrichtung (100) konfiguriert ist, um einen Befehl einschließlich einer korrigierten Position des zweiten Steuerziels über das Netzwerk (2) an die zweite Antriebsvorrichtung zu übertragen, wenn die Steuervorrichtung (100) konfiguriert ist, um den Kollisionsvermeidungsbefehl zu empfangen.

9. Steuerungssystem (1) gemäß Anspruch 1, ferner umfassend einen visuellen Sensor (540) mit einem Bildgebungsteil (542), der mit dem Netzwerk (2) verbunden und so angeordnet ist, dass er die Vielzahl von Steuerzielen (522, 532 bis 534) abbildet,
wobei die Lehrvorrichtung (200)
ein Anzeigeteil (203), das konfiguriert ist, um ein von dem Bildgebungsteil (542) aufgenommenes Bild anzuzeigen, wobei das Bild von dem visuellen Sensor (540) über das Netzwerk (2) transferiert wird, und
ein Vorgangsteil (204) enthält, das konfiguriert ist, um einen Vorgang zum Eingeben eines Befehls für eine Antriebsvorrichtung, die ein Ziel ist, zu empfangen.

10. Steuerungssystem (1) gemäß Anspruch 1, wobei die Lehrvorrichtung (200) ein Vorgangssteil (204) enthält, das konfiguriert ist, um einen Vorgang zum Eingeben eines Stoppbefehls zu empfangen und um den Stoppbefehl über das Netzwerk (2) an wenigstens eine Antriebsvorrichtung aus der Vielzahl von Antriebsvorrichtungen (500, 520, 530, 530A bis 530C) zu übertragen.

11. Steuerungssystem (1) gemäß Anspruch 1, ferner umfassend: eine Sensorvorrichtung (550), die mit dem Netzwerk (2) verbunden ist und konfiguriert ist, um Zustände der Vielzahl von Steuerzielen (522, 532 bis 534) zu erfassen,
wobei die Lehrvorrichtung (200) konfiguriert ist, um einen Ausgabewert der Sensorvorrichtung (550) über das Netzwerk (2) zu empfangen.

## Revendications

1. Système de commande (1) pour commander une pluralité de cibles de commande (522, 532 à 534), le système de commande (1) comprenant :
une pluralité de dispositifs d'entraînement (500, 520, 530, 530A à 530C) qui sont connectés à un réseau (2) et entraînent la pluralité de cibles de commande (522, 532 à 534) ;
un dispositif de commande (100) qui commande la pluralité de dispositifs d'entraînement (500, 520, 530, 530A à 530C) via le réseau (2) ; et
un dispositif d'enseignement (200) pour enseigner des opérations de cibles de commande correspondantes à la pluralité de dispositifs d'entraînement (500, 520, 530, 530A à 530C) en même temps,
dans lequel le dispositif d'enseignement (200) est configuré pour transmettre des instructions pour l'entraînement de la cible de commande correspondante à chacun de la pluralité de dispositifs d'entraînement (500, 520, 530, 530A à 530C) via le réseau (2) en même temps, **caractérisé en ce que**
le dispositif de commande (100) et la pluralité de dispositifs d'entraînement (500, 520, 530, 530A à 530C) incluent des temporisateurs (112, 503) synchronisés temporellement l'un avec l'autre,
le dispositif de commande (100) est configuré pour déterminer une temporisation de synchronisation à laquelle un signal correspondant à l'instruction reçue dans chacun de la pluralité de dispositifs d'entraînement (500, 520, 530, 530A à 530C) est délivré, en référence à un temps géré par un temporisateur, et
la pluralité de dispositifs d'entraînement (500, 520, 530, 530A à 530C) entraînent les cibles de commande (522, 532 à 534) correspondantes sur la base des instructions reçues et de la temporisation de synchronisation, de sorte que le dispositif d'enseignement (200) enseigne les opérations de la pluralité de cibles de commande (522, 532 à 534) en même temps d'une manière synchrone, dans lequel la pluralité de cibles de commande (522, 532 à 534) comprend un robot articulé (534) et des servomoteurs (522A, 522B), dans lequel les servomoteurs (522A, 522B) entraînent un étage XY (750).

2. Système de commande (1) selon la revendication 1,
dans lequel le dispositif d'enseignement (200) est connecté à un premier dispositif d'entraînement parmi la pluralité de dispositifs d'entraînement (500, 520, 530, 530A à 530C) via une ligne de communication (509), et configuré pour délivrer une instruction pour un deuxième dispositif d'entraînement parmi la pluralité de dispositifs d'entraînement (500, 520, 530, 530A à 530C) au premier dispositif d'entraînement, et
le premier dispositif d'entraînement est configuré pour transmettre l'instruction pour le deuxième dispositif d'entraînement au deuxième dispositif d'entraînement via le réseau (2).

3. Système de commande (1) selon la revendication 1,
dans lequel le dispositif d'enseignement (200) est connecté au réseau (2) et est configuré pour transmettre une instruction pour l'entraînement d'une cible de commande correspondante à un dispositif d'entraînement qui est une cible via le réseau (2).

4. Système de commande (1) selon la revendication 3, dans lequel le dispositif de commande (100) est configuré pour collecter l'instruction transmise par le dispositif d'enseignement (200) via le réseau (2) et pour transmettre l'instruction collectée au dispositif d'entraînement qui est la cible via le réseau (2).

5. Système de commande (1) selon la revendication 4,
dans lequel le dispositif de commande (100) est configuré pour stocker l'instruction collectée dans une zone d'une trame de communication allouée au dispositif d'entraînement qui est la cible, et pour transmettre la trame de communication via le réseau (2), et
lorsque le dispositif d'entraînement qui est la cible reçoit la trame de communication, le dispositif d'entraînement qui est la cible est configuré pour lire l'instruction stockée dans la zone allouée au dispositif d'entraînement qui est la cible.

6. Système de commande (1) selon la revendication 1,
dans lequel
le dispositif de commande (100) est configuré pour transmettre une trame de communication à des intervalles prédéterminés via le réseau (2), et
le dispositif d'enseignement (200) est configuré pour transmettre une instruction pour un dispositif d'entraînement qui est une cible et pour ordonner une temporisation à laquelle un signal correspondant à l'instruction reçue dans le dispositif d'entraînement qui est la cible est délivré pendant une période au cours de laquelle la trame de communication n'est pas transférée.

7. Système de commande (1) selon la revendication 1,
dans lequel, lorsqu'un premier dispositif d'entraînement parmi la pluralité de dispositifs d'entraînement (500, 520, 530, 530A à 530C) est configuré pour recevoir une instruction pour l'entraînement d'une première cible de commande correspondante depuis le dispositif d'enseignement (200), le premier dispositif d'entraînement est configuré pour déterminer une probabilité de collision entre la première cible de commande et une deuxième cible de commande en raison d'une exécution de l'instruction pour l'entraînement de la première cible de commande correspondante, et
lorsqu'il est déterminé qu'il existe une probabilité de collision, le premier dispositif d'entraînement est configuré pour arrêter l'exécution de l'instruction pour l'entraînement de la première cible de commande correspondante et pour notifier au dispositif d'enseignement (200) que l'instruction pour l'entraînement de la première cible de commande correspondante est incapable d'être exécutée.

8. Système de commande (1) selon la revendication 1,
dans lequel, lorsqu'un premier dispositif d'entraînement parmi la pluralité de dispositifs d'entraînement (500, 520, 530, 530A à 530C) est configuré pour recevoir une instruction pour l'entraînement d'une première cible de commande correspondante depuis le dispositif d'enseignement (200), le premier dispositif d'entraînement détermine une probabilité de collision entre la première cible de commande et une deuxième cible de commande en raison d'une exécution de l'instruction pour l'entraînement de la première cible de commande correspondante, et pour transmettre une instruction d'évitement de collision pour un deuxième dispositif d'entraînement qui est configuré pour entraîner la deuxième cible de commande au dispositif de commande (100) via le réseau (2) lorsqu'il est déterminé qu'il existe une probabilité de collision, et
le dispositif de commande (100) est configuré pour transmettre une instruction incluant une position corrigée de la deuxième cible de commande au deuxième dispositif d'entraînement via le réseau (2) lorsque le dispositif de commande (100) est configuré pour recevoir l'instruction d'évitement de collision.

9. Système de commande (1) selon la revendication 1, comprenant en outre un capteur visuel (540) incluant une partie d'imagerie (542) connectée au réseau (2) et disposée pour imager la pluralité de cibles de commande (522, 532 à 534),
dans lequel le dispositif d'enseignement (200) inclut
une partie d'affichage (203) qui est configurée pour afficher une image capturée par la partie d'imagerie (542), l'image étant transférée depuis le capteur visuel (540) via le réseau (2), et
une partie d'opération (204) qui est configurée pour recevoir une opération pour entrer une instruction pour un dispositif d'entraînement qui est une cible.

10. Système de commande (1) selon la revendication 1, dans lequel le dispositif d'enseignement (200) inclut une partie d'opération (204) qui est configurée pour recevoir une opération pour entrer une instruction d'arrêt, et pour transmettre l'instruction d'arrêt à au moins un dispositif d'entraînement parmi la pluralité de dispositifs d'entraînement (500, 520, 530, 530A à 530C) via le réseau (2).

11. Système de commande (1) selon la revendication 1, comprenant en outre : un dispositif de détection (550) qui est connecté au réseau (2) et configuré pour détecter des états de la pluralité de cibles de commande (522, 532 à 534),
dans lequel le dispositif d'enseignement (200) est configuré pour recevoir une valeur de sortie du dispositif de détection (550) via le réseau (2).
